# EUROPEAN PATENT APPLICATION

(11) **EP 4 792 967 A1**
(43) Date of publication of application: **19.08.2026**
(21) Application number: 24900571.1
(22) Date of filing: 02.12.2024
(51) Int. Cl.: B23K 11/16, B23K 11/11, B23K 11/24, C22C 18/00, C22C 38/00, C22C 38/60, B23K 103/04

(54) **RESISTANCE SPOT WELDED MEMBER, AND RESISTANCE SPOT WELDING METHOD FOR SAME**

(30) Priority: 08.12.2023 JP 2023207930
(71) Applicant: JFE Steel Corporation, Tokyo 100-0011 (JP)
(72) Inventor: KOMINE, Shinsuke, Tokyo 100-0011 (JP); SAWANISHI, Chikaumi, Tokyo 100-0011 (JP); TAKASHIMA, Katsutoshi, Tokyo 100-0011 (JP)
(74) Representative: Hoffmann Eitle
(86) International application number: PCT/JP2024/042493
(87) International publication number: WO 2025/121277

(57) **Abstract**

An object is to provide a resistance spot welded member and a resistance spot welding method therefor. A resistance spot welded member of the present invention includes two or more overlapped steel sheets resistance spot welded to one another. In the resistance spot welded member, the two or more overlapped steel sheets include one or more Zn-coated steel sheets; in a pair or pairs in which two of the steel sheets are in contact with each other in a vertical direction while having a Zn coating between the steel sheets, the pair having the largest difference in tensile strength is defined as a first pair of sheets; the first pair of sheets is such that an Fe-Zn alloy layer present from a position 300 µm away from an end of a nugget in the sheet width direction to a position 700 µm away from the end of the nugget has an Fe concentration satisfying expressions (1) to (3): $98 \geq {C}_{Fe}$ 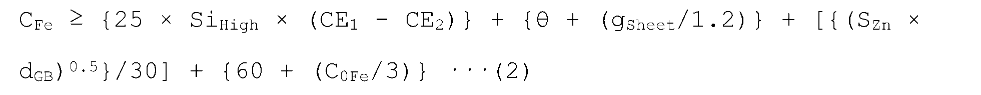 CFe ≥ {25 × SiHigh × (CE1 - CE2)} + {θ + (gSheet/1.2)} + [{(SZn × dGB)0.5}/30] + {60 + (C0Fe/3)} $\left|m\right| \leq 0.10$

## Description

### Technical Field

The present invention relates to a resistance spot welded member formed by resistance spot welding of multiple steel sheets, in particular, to a resistance spot welded member suited as a member of a structural part for an automobile or the like, and to a resistance spot welding method therefor.

### Background Art

In order to reduce CO₂ emissions from the point of view of global environment protection, the automobile industry has constantly worked on an important challenge of improving the fuel efficiency of automobiles by reducing the weight of automobile bodies while maintaining their strength. Automobile bodies that are more lightweight and are as strong as ever are also desirable from the points of view of enhancing crash safety and fuel efficiency. An effective approach to overcoming these challenges is to increase the strength of steel sheets as materials for automotive parts so that the steel sheets can be reduced in thickness. In recent years, steel sheets with a tensile strength (TS) of 980 MPa or more have gained increased use.

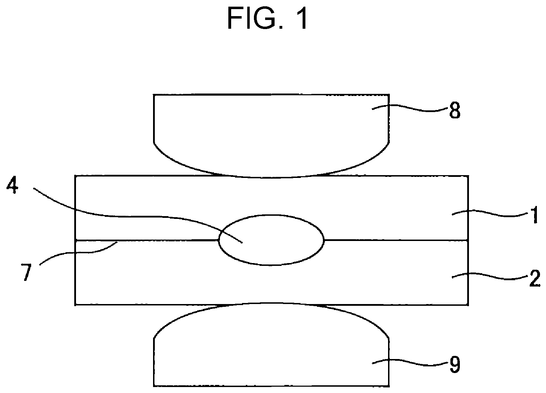

In the automobile assembly process, press-formed automotive parts are generally combined by overlapping steel sheets and joining them together by welding. From the points of view of costs and manufacturing efficiency, resistance spot welding, which is a type of lap resistance welding, is frequently used to join automotive parts. In this welding method, two or more overlapped steel sheets are held between a pair of welding electrodes upper side and lower side of the steel sheets, and, while applying an electrode force from the pair of welding electrodes upper side and lower side of the steel sheets, a high welding current is passed between the upper and lower welding electrodes for a short period of time to join the steel sheets to one another. As an example, Fig. 1 illustrates two overlapped steel sheets 1 and 2 held between welding electrodes 8 and 9. In this method, a spot-shaped weld 4 is obtained utilizing the resistance heat generated by the passage of a high welding current between the welding electrodes. When a current is passed through the overlapped steel sheets, the two steel sheets 1 and 2 are melted at the point of contact between the steel sheets and then solidify, leaving an elliptical weld 4, called a nugget. The steel sheets are thereby joined to each other through the spot.

Ensuring the crash safety of automobiles requires to enhance not only the strength of steel sheets but also the strength of welds. Various test methods have been established for evaluating the strength of resistance spot welds. One of the common evaluation methods is the tensile shear test specified in JIS Z3136. In this test method, a tensile load is applied to a welded joint in a tensile shear direction to measure the tensile shear strength (hereinafter, written as TSS).

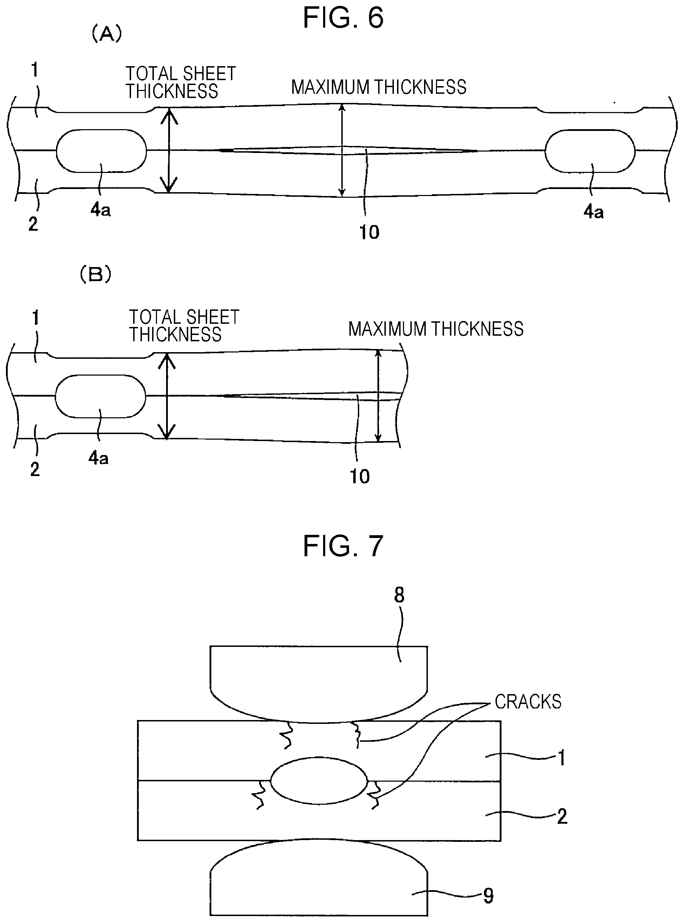

From the point of view of corrosion resistance, rust-resistant steel sheets (so-called "surface-treated steel sheets"), such as zinc (Zn)-coated steel sheets, are used as automotive steel sheets for parts at risk of corrosion. Unfortunately, a set of sheets that includes overlapped steel sheets including a surface-treated steel sheet may suffer cracking at the weld during resistance spot welding. The cracks at the weld are believed to be caused by so-called liquid metal embrittlement (hereinafter, such cracks or cracking will be written as "LME cracks" or "LME cracking). The low-melting point metal coating layer on the surface of the surface-treated steel sheet is melted during the welding. The electrode force from the welding electrodes, and the tensile stress due to the thermal expansion of the steel sheets or the contraction of the steel sheets are applied to the weld and cause the melt of the low-melting point metal to penetrate grain boundaries in the base metal of the surface-treated steel sheet. This gives rise to a decrease in grain boundary strength and causes cracks. LME cracks occur at various locations, for example, as illustrated in Fig. 7, on the surfaces of the steel sheets 1 and 2 on the sides in contact with the welding electrodes 8 and 9, and on the surfaces of the steel sheets 1 and 2 on the sides in contact with each other.

For example, such LME cracking is addressed by the techniques described in Patent Literatures 1 to 4. Patent Literature 1 proposes that the chemical composition of steel sheets forming a set of sheets is controlled to a predetermined range, specifically, in wt%, C: 0.003 to 0.01%, Mn: 0.05 to 0.5%, P: 0.02% or less, sol. Al: 0.1% or less, Ti: 48 × (N/14) to 48 × {(N/14) + (S/32)}%, Nb: 93 × (C/12) to 0.1%, B: 0.0005 to 0.003%, N: 0.01% or less, and Ni: 0.05% or less, the balance including Fe and unavoidable impurities.

Patent Literature 2 proposes a method for spot welding high-strength coated steel sheets in which spot welding is performed while controlling the welding current passing time and the post-weld-heating holding time so as to satisfy the following conditional expressions (A) and (B): $0.25 \times \left(10\times t+2\right) / 50 \leq WT \leq 0.50 \times \left(10\times t+2\right) / 50$ $300 - 500 \times t + 250 \times {t}^{2} \leq HT$ In the conditional expressions (A) and (B), t is the sheet thickness (mm), WT is the welding current passing time (ms), and HT is the post-weld-heating holding time (ms).

Patent Literature 2 also proposes that high-strength galvanized steel sheets having a limited amount of alloying elements in the steel sheets are resistance spot welded while appropriately controlling the current passing time and the post-heating electrode holding time in accordance with the thickness of the steel sheets.

Patent Literature 3 proposes a resistance spot welding method in which the heating pattern is multistage heating having three or more stages, welding conditions, such as current passing time and welding current, are controlled so that the range of appropriate current (ΔI) will be 1.0 kA or more, preferably 2.0 kA or more, and a cooling time is provided between each two stages. The range of appropriate current is a range of current in which a nugget having a nugget diameter equal to or greater than the desired diameter can be formed stably and the unmelted thickness is stably 0.05 mm or more.

Patent Literature 4 proposes a technique that prevents LME cracking by removing a coating layer from the to-be-welded portion prior to resistance spot welding.

### Citation List

### Patent Literature

PTL 1: Japanese Unexamined Patent Application Publication No. 10-195597
PTL 2: Japanese Unexamined Patent Application Publication No. 2003-103377
PTL 3: Japanese Unexamined Patent Application Publication No. 2003-236676
PTL 4: WO 2016/159169

### Summary of Invention

### Technical Problem

However, Patent Literature 1 entails limiting the amounts of alloying elements in the steel sheets and thus has a drawback in that, for example, the use of steel sheets that meet the required performance is limited. In particular, under the situation where steel sheets are highly alloyed along with the recent trend toward higher strength, the technique of Patent Literature 1 has extremely limited applications.

The method proposed in Patent Literature 2 addresses the suppression of LME cracking assuming that the welding current is set to a very high level that will cause splash, and there is no mention of LME cracking under splash-free conditions.

Patent Literature 3 has drawbacks in that a large number of man-hours are needed to optimize the welding conditions, and the technique cannot be applied to steel sheets and sets of sheets when a range of appropriate current cannot be ensured. In addition, Patent Literatures 2 and 3 do not take into account the effects of the electrode angle of the welding electrodes, and thus may fail to serve as sufficient countermeasures in view of the actual work during automobile assembly.

Patent Literature 4 requires a step of removing a coating layer beforehand, which adds manufacturing costs. Furthermore, the removal of a coating layer will reduce the corrosion resistance of the weld.

The present invention has been made in consideration of the circumstances discussed above. It is therefore an object of the present invention to provide a resistance spot welded member and a resistance spot welding method therefor that are designed in such a way that the occurrence of LME cracking in the resistance spot weld can be suppressed even when, in particular, the set of sheets includes multiple steel sheets including a surface-treated steel sheet. Solution to Problem

The present inventors carried out extensive studies directed to achieving the above object and have obtained the following findings as a result.

The effects of the present invention on cracks that occur during welding are a result of various factors influencing one another in a complex manner and therefore cannot be easily explained, but the present inventors believe the mechanism as follows. LME cracks in a resistance spot weld are likely to occur when an excessive tensile residual stress is produced in the resistance spot weld due to, for example, working disturbances during the welding process. It is known that LME cracks occur easily at high-tensile stress local regions upon release of the welding electrodes after heating and pressure application in resistance spot welding. This phenomenon is particularly noticeable at the steel sheet mating interface where the steel sheets are in contact with one another. In addition, a significant difference in strength between the overlapped steel sheets will give rise to tensile stress stemming from different transformation behaviors during cooling.

As mentioned above, LME cracking occurs when tensile stress is applied to steel sheets that are in contact with a liquid metal, such as Zn. In view of this, the Fe-Zn interdiffusion is promoted between the sheets (namely, at the steel sheet mating interface) where there can be a large difference in strength between the overlapped steel sheets, and thereby the alloying of Fe with Zn is allowed to proceed. In this way, a Zn alloy layer is formed in a controlled manner so that the alloy layer will have an Fe concentration near the nugget at or above a certain level. This makes sure that there is no liquid Zn between the sheets when the above tensile stress is applied. The present inventors came up with the idea that LME cracking can be suppressed by using this technical idea. The present inventors have also identified welding conditions that are appropriate for controlling the Fe concentration in the Zn alloy layer to or above a certain level.

The present invention has been made based on the above findings. Summary configurations of the present invention are as follows.
[1] A resistance spot welded member including two or more overlapped steel sheets resistance spot welded to one another, wherein
   the two or more overlapped steel sheets include one or more Zn-coated steel sheets,
   in a pair or pairs in which two of the steel sheets are in contact with each other in a vertical direction while having a Zn coating between the steel sheets, the pair having the largest difference in tensile strength is defined as a first pair of sheets,

   the first pair of sheets has a first region extending from a position A 300 µm away from an end of a nugget on a steel sheet mating interface in a sheet width direction to a position B 700 µm away from the end of the nugget in the sheet width direction, an Fe-Zn alloy layer present in the first region has an Fe concentration indicated by C_{Fe} (mass%),
   the Fe-Zn alloy layer in the first region has a gradient of C_{Fe}, indicated by letter m, and
   the Fe concentration in the Fe-Zn alloy layer in the first region satisfies all of expressions (1) to (3): $98 \geq {C}_{Fe}$ 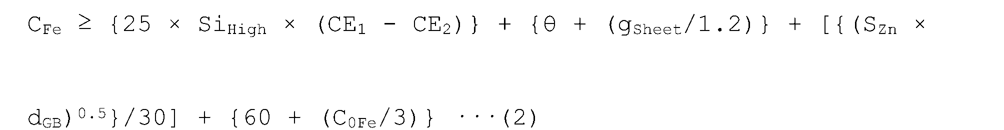 CFe ≥ {25 × SiHigh × (CE1 - CE2)} + {θ + (gSheet/1.2)} + [{(SZn × dGB)0.5}/30] + {60 + (C0Fe/3)} ···(2) $\left|m\right| \leq 0.10$ in expression (2),
   C_{0Fe} (mass%): Fe concentration in the steel sheet having the highest average Fe concentration in the Zn coating among the Zn-coated steel sheets in the first pair of sheets;
   S_{Zn} (g/m²): Zn coating weight in the steel sheet having the largest Zn coating weight among the Zn-coated steel sheets in the first pair of sheets;
   CE₁ (%): equivalent carbon content in the steel sheet having a higher equivalent carbon content in the first pair of sheets;
   CE₂ (%): equivalent carbon content in the steel sheet having a lower equivalent carbon content in the first pair of sheets;
   Si_{High} (mass%): Si concentration in the steel sheet having a higher Si content in the first pair of sheets;
   d_{GB} (boundaries/mm): grain boundary density in an outermost layer in a base metal of the steel sheet having a higher tensile strength in the first pair of sheets;
   θ (degree): inclination of the nugget obtained as an angle between a straight line connecting shoulders of the steel sheet that is outermost of the two or more overlapped steel sheets, and a tangent to an outer periphery of the nugget in the steel sheet that is outermost; and
   g_{Sheet} (mm): total sheet-to-sheet gap at the steel sheet mating interface(s) of the two or more overlapped steel sheets.
[2] The resistance spot welded member according to [1], wherein the equivalent carbon contents in the two steel sheets in the first pair of sheets are CE₁ - CE₂ ≤ 0.7, and the grain boundary density in the outermost layer in the base metal is d_{GB} ≤ 700.
[3] A resistance spot welding method for producing the resistance spot welded member described in [1] or [2], the resistance spot welding method including:
   a main heating step of clamping two or more overlapped steel sheets between a pair of welding electrodes, and passing a current while applying an electrode force to form a nugget, wherein
   the main heating step is performed under welding conditions satisfying expression (4): 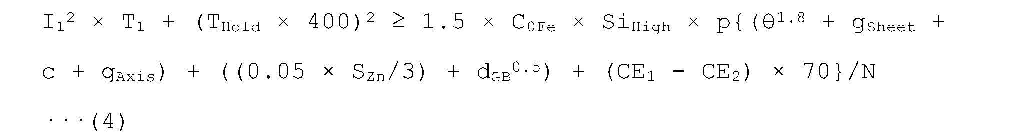 I12 × T1 + (THold × 400)2 ≥ 1.5 × C0Fe × SiHigh × p{(θ1.8 + gSheet + c + gAxis) + ((0.05 × SZn/3) + dGB0.5) + (CE1 - CE2) × 70}/N wherein I₁ (kA) is the average current in the main heating step, T₁ (s) is the current passing time in the main heating step, p (kN) is the average electrode force from the welding electrodes, T_{Hold} (s) is the post-heating holding time, and N (sheets) is the number of steel sheets,
   in expression (4), c is the gap (mm) between the welding electrode and the steel sheet that is outermost of the two or more overlapped steel sheets, and g_{Axis} is the amount of misalignment (mm) between the pair of welding electrodes.
[4] The resistance spot welding method for producing the resistance spot welded member according to [3], further including a posterior heating step of performing a heat post-treatment on the nugget after the main heating step, wherein
   the main heating step and the posterior heating step are performed under welding conditions satisfying expression (5) instead of expression (4): 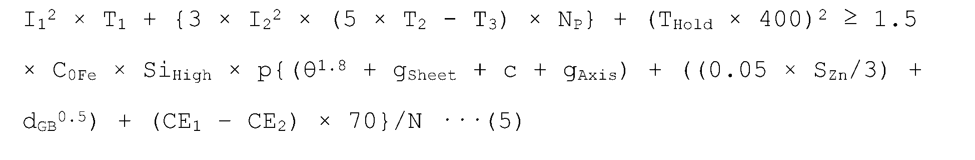 I12 × T1 + {3 × I22 × (5 × T2 - T3) × NP} + (THold × 400)2 ≥ 1.5 × C0Fe × SiHigh × p{(θ1.8 + gSheet + c + gAxis) + ((0.05 × SZn/3) + dGB0.5) + (CE1 - CE2) × 70}/N wherein I₁ (kA) is the average current in the main heating step, T₁ (s) is the current passing time in the main heating step, I₂ (kA) is the average current in the posterior heating step, T₂ (s) is the current passing time in the posterior heating step, Nₚ (time) is the number of current application by the posterior heating step, T₃ (s) is the current passing interval between the main heating step and the posterior heating step, p (kN) is the average electrode force from the welding electrodes, T_{Hold} (s) is the post-heating holding time, and N (sheets) is the number of steel sheets.
[5] The resistance spot welding method for producing the resistance spot welded member according to [3] or [4], wherein the main heating step is performed in a state where at least one welding spot immediately before the electrode force is applied by the welding electrodes satisfies one, or two or more selected from (a) to (d):
   (a) the electrode angle between the welding electrodes and the two or more overlapped steel sheets is 0.2 degrees or more;
   (b) a gap of 0.5 mm or more is present between at least one pair of steel sheets among the two or more overlapped steel sheets;
   (c) a gap of 0.5 mm or more is present between any of the welding electrodes and the steel sheet that is outermost of the two or more overlapped steel sheets;
   (d) the amount of misalignment between the pair of welding electrodes is 0.1 mm or more.
[6] The resistance spot welding method for producing the resistance spot welded member according to [4] or [5], further including a non-energization step of suspending current supply, between the main heating step and the posterior heating step.
[7] The resistance spot welding method for producing the resistance spot welded member according to [6], wherein the non-energization step and the posterior heating step are repeated after the main heating step.

### Advantageous Effects of Invention

The resistance spot welded member according to the present invention can resist LME cracking in the resistance spot weld regardless of the chemical composition of the steel sheets or the working disturbances during the welding process, in particular, even in the case where the set of sheets includes multiple steel sheets including a surface-treated steel sheet. The resistance spot welding method provided herein can produce a resistance spot welded member having such a welded joint without removing a coating layer of a Zn-coated steel sheet in the set of sheets beforehand.

### Brief Description of Drawings

[Fig. 1] Fig. 1 is a through thickness sectional view schematically illustrating an example of resistance spot welding.
[Fig. 2] Fig. 2(A) is a through thickness sectional view schematically illustrating a resistance spot weld and the periphery thereof in a resistance spot welded member according to an embodiment of the present invention, and also illustrating how C_{Fe} is measured; Fig. 2(B) is a diagram illustrating the gradient of C_{Fe}.
[Fig. 3] Fig. 3(A) is a through thickness sectional view schematically illustrating a resistance spot weld and the periphery thereof in a resistance spot welded member according to another embodiment of the present invention, and also illustrating how C_{Fe} is measured; Fig. 3(B) is a diagram illustrating the gradient of C_{Fe}.
[Fig. 4] Fig. 4 is a diagram illustrating relationships among C_{Fe} in a resistance spot weld according to the present invention, a right-side value of expression (2), and a result of LME cracking evaluation.
[Fig. 5] Fig. 5 is a through thickness sectional view schematically illustrating how to measure the inclination (θ) of a nugget that is a working disturbance encountered during resistance spot welding.
[Fig. 6] Figs. 6(A) and 6(B) are through thickness sectional views schematically illustrating how to measure a gap between sheets (g_{Sheet}) that is a working disturbance encountered during resistance spot welding.
[Fig. 7] Fig. 7 is a through thickness sectional view schematically illustrating an exemplary occurrence of cracks during conventional resistance spot welding.

### Description of Embodiments

A resistance spot welded member and a resistance spot welding method therefor according to the present invention will be described in detail below. The present invention is not limited to the following embodiments.

### [Resistance spot welded members]

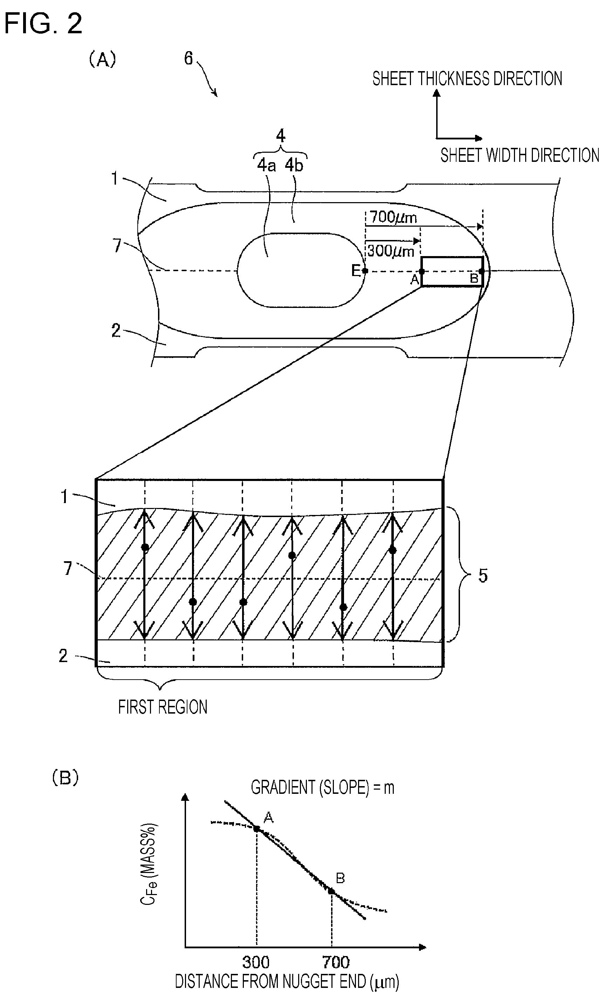

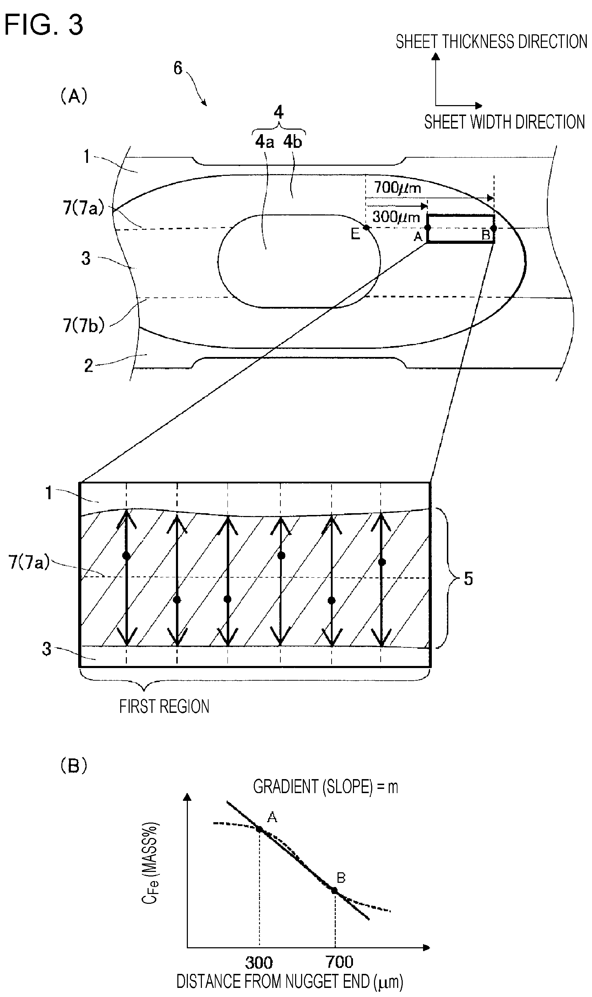

Resistance spot welded members (hereinafter, written as "welded members") of the present invention will be described with reference to Figs. 2 and 3. Figs. 2(A) and 3(A) are through thickness sectional views that illustrate an exemplary resistance spot weld in a welded member, including an enlarged illustration of a peripheral portion of the resistance spot weld. The enlarged portions are the regions enclosed by a rectangular frame in Figs. 2(A) and 3(A).

The present invention pertains to a welded member that has a resistance spot weld in which two or more overlapped steel sheets are resistance spot welded. That is, the welded member of the present invention has two or more steel sheets and a resistance spot weld formed by welding of the steel sheets. As will be described later, the overlapped steel sheets include one or more Zn-coated steel sheets that have, as the coating layer, a Zn coating on the steel sheet surface. The number of overlapped steel sheets is preferably three or more. The upper limit of the number of steel sheets is not particularly specified but is preferably five or less.

Increasing the number of overlapped steel sheets involves an increased amount of heat input to the weld and thus tends to result in LME cracking. In view of this, the advantageous effects of the present invention can be obtained more effectively when the number of steel sheets is three or more.

In the example illustrated in Fig. 2(A), a welded member 6 includes two overlapped steel sheets 1 and 2 welded together. Either or both of the lower steel sheet 2 (hereinafter, also written as the "lower sheet") and/or the upper steel sheet 1 (hereinafter, also written as the "upper sheet") are Zn-coated steel sheets. In the case of the welded member 6 in Fig. 2(A), a resistance spot weld 4, which will be described later, is formed at a steel sheet mating interface (i.e., steel sheet overlapping interface) 7 where the upper sheet 1 and the lower sheet 2 are in contact with each other.

The number of steel sheets may be three or more. For example, Fig. 3(A) illustrates a welded member 6 in which three overlapped steel sheets 1, 2, and 3 are welded together. In the welded member 6 in Fig. 3(A), at least one or all of the lowermost steel sheet 2 (i.e., the lower sheet), the uppermost steel sheet 1 (i.e., the upper sheet), and the intermediate steel sheet 3 (hereinafter, also written as the "intermediate sheet") are Zn-coated steel sheets. In the case of the welded member 6 in Fig. 3(A), a resistance spot weld 4, which will be described below, is formed so as to include steel sheet mating interfaces 7 (7a, 7b) in which the lower sheet 2 is in contact with the intermediate sheet 3, and the intermediate sheet 3 is in contact with the upper sheet 1.

### [Resistance spot welds]

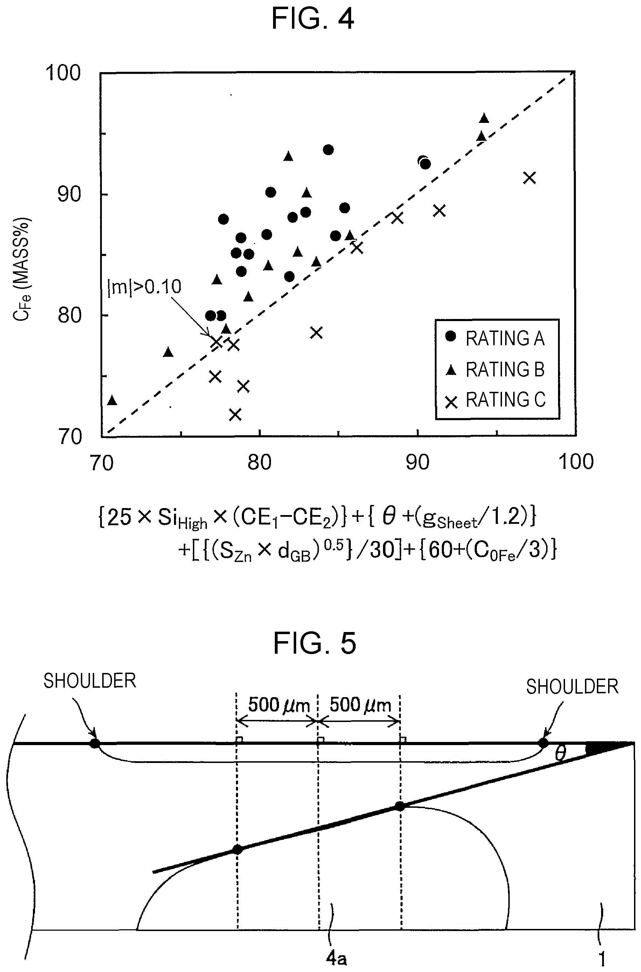

First, the technical idea of the present invention will be described in detail with reference to Fig. 4.

Fig. 4 illustrates relationships between the Fe concentration (C_{Fe}) in an Fe-Zn alloy layer (described later) formed between sheets in a resistance spot weld (hereinafter, written as the "weld") of a welded member of the present invention and the right-side value of expression (2) described later, and also illustrates the correspondence between these values and the result of LME cracking evaluation. The data discussed here are of welded members produced using sets of sheets and welding conditions described in Examples later, and are based on the evaluation criteria for LME cracking evaluation described in Examples later. The "right-side value of expression (2)" is a value calculated from "{25 × Si_{High} × (CE₁ - CE₂)} + {θ + (g_{Sheet}/1.2)} + [{(S_{Zn} × d_{GB})^{0.5}}/30] + {60 + (C_{0Fe}/3)}".

As described above, LME cracking occurs when a tensile stress is applied to steel sheets in contact with a liquid metal, such as Zn. In addition, a significant difference in strength among the overlapped steel sheets will give rise to tensile stress stemming from different transformation behaviors during cooling. In view of this, it is important in the present invention that the Fe-Zn interdiffusion between the sheets be promoted in a specific region, and thereby the alloying of Fe with Zn be allowed to proceed so as to form a Zn alloy layer in a controlled manner so that the Fe concentration will be at or above a certain level. This makes sure that there is no liquid Zn between the sheets when the tensile stress is applied.

Here, the phrase "Zn alloy layer (is formed in a controlled manner so that) the Fe concentration will be at or above a certain level" will be described. As illustrated in the welded members 6 in Figs. 2(A) and 3(A), a Zn alloy layer is formed outside the end of the nugget, i.e., the nugget end, and between the overlapped steel sheets (i.e., at the steel sheet mating interface 7). The higher the Fe concentration in the Zn alloy layer, the less the amount of liquid Zn after the alloying and the more the LME cracking is suppressed effectively. In the present invention, a region of the Zn alloy layer between the sheets that has a high Fe concentration is defined as the "Fe-Zn alloy layer", and the Fe concentration in the Fe-Zn alloy layer is defined as "C_{Fe}".

The degree of Fe-Zn alloying may be controlled by controlling the heating pattern during the welding. In particular, effective Fe-Zn alloying is realized by holding the steel sheets at high temperatures where the alloying is allowed to proceed, for a long period of time during the energization. This control of heating pattern enables appropriately controlling the Fe concentration in the Fe-Zn alloy layer in accordance with the set of sheets to be welded, the strengths, chemical compositions, microstructures in surface layers, and coating layers of the steel sheets used in the set of sheets, and disturbances during the welding.

The "specific region" described above is a region in which the C_{Fe} is measured in the sheet width direction, specifically, a region that extends from a position A 300 µm away from a nugget end E on the steel sheet mating interface 7 in the sheet width direction (namely, toward the base metal) to a position B 700 µm away from the nugget end E on the steel sheet mating interface 7 in the sheet width direction. Here, the nugget end E is the intersection between the steel sheet mating interface 7 and the outer periphery of the nugget 4a. In the present invention, this region is referred to as the "first region". The first regions are present on both end sides of the nugget 4a.

For the sake of explanation, Figs. 2(A) and 3(A) illustrate the first region on only one end side of the nugget, and omits the illustration of the first region on the other end side of the nugget. The first regions are located inside a weld heat affected zone 4b formed around the outer periphery of the nugget 4a. The length in the sheet thickness direction of the rectangular frames illustrated in Figs. 2(A) and 3(A) are set appropriately so that the frame includes the Fe-Zn alloy layer 5 in the first region.

The first region is probably vulnerable to LME cracking at the time of welding. The reasons for this are not clear but are probably explained as follows. Because the maximum temperature reached during welding is higher with increasing closeness to the nugget, liquid Zn will be more likely to occur near the nugget. In regions that are more than 700 µm away from the nugget end E on the steel sheet mating interface 7 in the sheet width direction, on the other hand, the maximum temperature reached during welding may be below the melting point of the Zn coating and therefore LME cracking will be unlikely to occur.

For the above reasons, the present inventors have focused on material properties of sheets and have found that, as illustrated in Fig. 4, the C_{Fe} required to suppress LME cracking varies depending on the difference in TS between the steel sheets, the Si contents, the microstructures in the surface layers of the steel sheets, the Zn concentration in the Zn coating, the Zn coating weight, and working disturbances. Furthermore, the present inventors have found that LME cracking can be suppressed by appropriately controlling the C_{Fe} in the first region in accordance with material properties of the sheets.

Next, the weld of the present invention completed based on the above technical idea will be described.

In the weld 4 of the present invention, as described above, it is important to appropriately control the Fe concentration in the Fe-Zn alloy layer 5 in the first region near the nugget 4a.

Specifically, as illustrated in Figs. 2(A) and 3(A), two or more steel sheets are overlapped and a Zn coating is present between any two steel sheets in contact with each other in the vertical direction. In such a pair or pairs of steel sheets, the pair having the largest difference in tensile strength is defined as the first pair of sheets. In the example illustrated in Fig. 2(A), the upper sheet 1 and the lower sheet 2 constitute the first pair of sheets. In the example illustrated in Fig. 3(A), the upper sheet 1 and the intermediate sheet 3 form the first pair of sheets.

In this first pair of sheets, the region from the position A to the position B on the steel sheet mating interface 7 is referred to as the first region, and the Fe concentration in the Fe-Zn alloy layer present in this first region is represented as C_{Fe} (mass%). Furthermore, the gradient of C_{Fe} in the Fe-Zn alloy layer in the first region is represented by m. The Fe concentration (C_{Fe}) in the Fe-Zn alloy layer in the first region is controlled to satisfy all of expressions (1) to (3): $98 \geq {C}_{Fe}$ 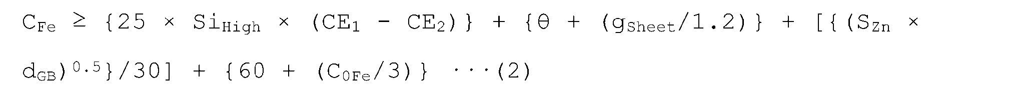 CFe ≥ {25 × SiHigh × (CE1 - CE2)} + {θ + (gSheet/1.2)} + [{(SZn × dGB)0.5}/30] + {60 + (C0Fe/3)} $\left|m\right| \leq 0.10$

In expression (2),
C_{0Fe} (mass%): Fe concentration in the steel sheet having the highest average Fe concentration in the Zn coating among the Zn-coated steel sheets in the first pair of sheets;
S_{Zn} (g/m²): Zn coating weight in the steel sheet having the largest Zn coating weight among the Zn-coated steel sheets in the first pair of sheets;
CE₁ (%): equivalent carbon content in the steel sheet having a higher equivalent carbon content in the first pair of sheets;
CE₂ (%):: equivalent carbon content in the steel sheet having a lower equivalent carbon content in the first pair of sheets;
Si_{High} (mass%): Si concentration in the steel sheet having the highest Si content in the first pair of sheets;
d_{GB} (boundaries/mm): grain boundary density in an outermost layer in the base metal of the steel sheet having a higher tensile strength in the first pair of sheets;
θ (degree): inclination of the nugget obtained as an angle between a straight line connecting shoulders of the steel sheet that is outermost of the two or more overlapped steel sheets, and a tangent to an outer periphery of the nugget in the steel sheet that is outermost (see Fig. 5); and
g_{Sheet} (mm): total gap at the steel sheet mating interface(s) 7 of the two or more overlapped steel sheets (see Fig. 6).

CE₁ and CE₂ in expression (2) are equivalent carbon contents (CE), and CE may be determined by the following expression (6). 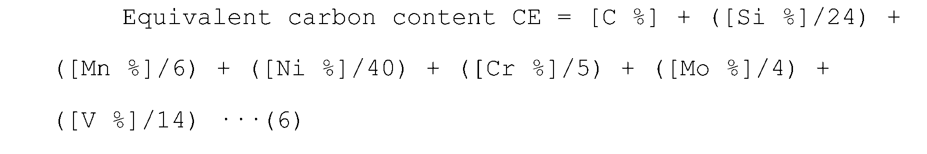 Equivalent carbon content CE = [C %] + ([Si %]/24) + ([Mn %]/6) + ([Ni %]/40) + ([Cr %]/5) + ([Mo %]/4) + ([V %]/14) The [element symbol %] in the above expression (6) indicates the content (mass%) of the element and is 0 when the element is absent.

The present invention specifies expressions (1) and (2) as above for the following reasons.

LME cracking is affected by various factors. In terms of the chemical composition of steel sheets, a possible factor that increases the risk of LME cracking is an increase in Si content. Silicon in steel sheets has complicated influences on LME cracking that cannot be explained simply. It is known, however, that silicon is an element that inhibits the alloying reaction between Fe and Zn. Therefore, an increase in Si content makes it easier for liquid Zn to occur between sheets. Thus, the lower limit of C_{Fe} increases as the Si content in steel sheets increases. For this reason, the Si concentration (Si_{High}) in the steel sheet with a higher Si content in the first pair of sheets is taken into consideration.

Furthermore, the lower limit of C_{Fe} increases with increasing difference (CE₁ - CE₂) in equivalent carbon content (CE₁ - CE₂). The reason for this is unclear but is probably explained as follows. A large difference in equivalent carbon content probably comes with a large difference in transformation temperature and a large difference in material properties. Steel sheets having different transformation temperatures show different amounts of volume expansion/contraction accompanying phase transformation during welding, which may give rise to a local increase in tensile stress. Furthermore, in the presence of a large difference in material properties, tensile stress will occur in the surface layer of the sheet with a higher equivalent carbon content due to the plastic deformation of the sheet with a lower equivalent carbon content and the friction between the sheets. For these reasons, the lower limit of C_{Fe} increases in accordance with the increase in difference between the equivalent carbon contents.

The inclination (θ) of the nugget is probably ascribed to the electrode angle during welding. The moment generated by the electrode force at an electrode angle produces tensile stress in part of the steel sheets. For this reason, the lower limit of C_{Fe} increases in accordance with the increase in nugget inclination.

Similarly to the inclination of the nugget, the total gap (g_{Sheet}) between the steel sheets at the steel sheet mating interface or interfaces is associated with the occurrence of tensile stress in part of the steel sheets upon application of electrode force. Thus, the lower limit of C_{Fe} increases in accordance with the increase in the total gap between the sheets at the steel sheet mating interface(s).

Among the Zn-coated steel sheets in the first pair of sheets, the steel sheet having the highest average Fe concentration in the Zn coating has an Fe concentration (C_{0Fe}). The lower limit of C_{Fe} increases with decreasing C_{0Fe}. The reason for this is unclear but is probably explained as follows. When the average Fe concentration in the Zn coating before welding is high, the Fe concentration in the Fe-Zn alloy layer that is the alloy layer after welding will be high. For this reason, the lower limit of C_{Fe} increases in accordance with the decrease in average Fe concentration. The "Fe concentration" in the above "Fe concentration (C_{0Fe}) in the steel sheet having the highest average Fe concentration in the Zn coating" means the Fe concentration in the Zn coating of the steel sheet.

Among the Zn-coated steel sheets in the first pair of sheets, the steel sheet having the largest Zn coating weight has a Zn coating weight (S_{Zn}). The lower limit of C_{Fe} increases with increasing S_{Zn}. The reason for this is unclear but is probably explained as follows. When the S_{Zn} is large, the coating layer is thick and the diffusion distance is extended. Thus, the alloying into an Fe-Zn alloy layer will be retarded. For this reason, the lower limit of C_{Fe} increases in accordance with the increase in coating weight.

In the first pair of sheets, the steel sheet having a higher tensile strength has a grain boundary density (d_{GB}) in an outermost layer of the base metal. The lower limit of C_{Fe} increases with increasing d_{GB}. The reason for this is unclear but is probably explained as follows. Because LME cracking stems from the embrittlement of grain boundaries, points of contact between liquid Zn and grain boundaries in the surface layer of the base metal serve as the origins of cracking. A high d_{GB} means a large number of points of contact between liquid Zn and grain boundaries in the surface layer of the base metal, and will consequently result in easy occurrence of cracks. For this reason, the lower limit of C_{Fe} increases in accordance with the increase in grain boundary density.

As already described, a significant difference in strength between overlapped steel sheets will give rise to easy occurrence of tensile stress stemming from different transformation behaviors during cooling.

For the reasons discussed above, the present invention specifies that the Fe concentration (C_{Fe}) in the Fe-Zn alloy layer in the first region on the steel sheet mating interface in the first pair of sheets satisfies expression (2).

The higher the C_{Fe}, the higher the melting point of the Zn alloy layer and the more the LME cracking is suppressed effectively. Thus, higher C_{Fe} is more desirable. However, achieving a very high C_{Fe} requires very long-time energization and may cause an increase in takt time. When the C_{Fe} is too high, furthermore, the boundary between the Fe-Zn alloy layer and the base metal becomes unclear and is sometimes difficult to identify. Thus, the upper limit of C_{Fe} is to satisfy expression (1). It is preferable that the upper limit of C_{Fe} in expression (1) be 95 (mass%) or less.

In order to obtain more effectively the functions and effects of the above-described expressions (1) and (2), it is preferable that the welded member, in addition to satisfying these expressions, have a difference in equivalent carbon content of CE₁ - CE₂ ≤ 0.7 and a grain boundary density in the outermost layer of the base metal of d_{GB} ≤ 700.
Furthermore, the Si_{High} is preferably 2.5% or less, and more preferably 2.0% or less.

The reason why expression (3) is specified in the present invention will be explained below.

Expression (3) specifies the gradient of C_{Fe} in the Fe-Zn alloy layer in the first region. The gradient of C_{Fe} can be determined from C_{Fe} at a position 300 µm away from the nugget end (position A illustrated in, for example, Fig. 2(A)) and C_{Fe} at a position 700 µm away from the nugget end (position B illustrated in, for example, Fig. 2(A)). As illustrated in the examples of Figs. 2(B) and 3(B), the absolute value of the slope of the straight line connecting A to B is determined. When the slope is large, the C_{Fe} changes significantly in the LME cracking susceptible region at 300 µm to 700 µm from the nugget end. Thus, the C_{Fe} may be low at some locations and LME may occur there. In order to make sure that LME will not occur locally at low-C_{Fe} locations, expression (3) is specified so that the absolute value of the slope (|m|) will be to be 0.10 or less.

In the present invention, the first region in which the Fe concentration (C_{Fe}) in the Fe-Zn alloy layer satisfies all of expressions (1) to (3) is formed on both end sides of the nugget. When the nugget 4a is not inclined with respect to the steel sheet mating interface 7 as illustrated in, for example, Figs. 2(A) and 3(A), the first region that is measured is one formed on either side of the nugget end. When the nugget 4a is inclined with respect to the steel sheet mating interface 7 as illustrated in, for example, Fig. 5, the first region that is measured is the one present on the side opposite to the inclined side. Specifically, when the nugget 4a is inclined in the direction illustrated in Fig. 5 (i.e., when the nugget 4a is inclined so that the left side in the figure descends with respect to the steel sheet mating interface 7), the first region that is measured is the one present on the right side of the nugget. In the case where three or more steel sheets are overlapped and an Fe-Zn alloy layer is formed at a plurality of steel sheet mating interfaces, the first region that is measured is the one present at the steel sheet mating interface where the difference in TS between the steel sheets in contact is largest (namely, at the steel sheet mating interface of the first pair of sheets).

In the present invention, the Si content, the coating weight, the Fe concentrations (C_{Fe}, C_{0Fe}), and the grain boundary density in the outermost layer of the base metal of the steel sheet may be measured by the methods described later in Examples. Furthermore, θ and g_{Sheet} may be measured by the methods described later with reference to Figs. 5 and 6.

### [Multiple steel sheets that are overlapped]

### [Zn-coated steel sheets]

As described above, at least one of the two or more overlapped steel sheets is a Zn-coated steel sheet. This is because LME cracking is a phenomenon that occurs when at least one Zn-coated steel sheet is used. The overlapped steel sheets (i.e., the set of sheets) may be all Zn-coated steel sheets. Alternatively, a Zn-coated steel sheet and a steel sheet having no metal coating layers (so-called a "cold rolled steel sheet") may be overlapped. The present invention can produce the advantageous effects in both cases.

In the present invention, the term "Zn-coated steel sheets" indicates steel sheets having a Zn coating layer, such as a zinc coating typically in the case of electrogalvanization (EG), hot-dip galvanization (GI), and hot-dip galvannealing (GA), or a zinc alloy coating containing zinc and other elements, such as aluminum and magnesium, on the surface of the base steel sheet as the base metal.

The composition of the coating layer is not particularly limited. However, because the alloy layer will be formed more easily during welding as the Fe concentration is higher, the Fe concentration in the coating layer is preferably 5 mass% or more. From the point of view of, for example, preventing a decrease in powdering resistance of the steel sheet, the Fe concentration in the coating layer is preferably 30 mass% or less.

In order to obtain more effectively the functions and effects of the present invention described above, the steel sheets used in the set of sheets may have the following configurations as necessary.

### [Si content in the steel sheets]

In the present invention, it is preferable that the plurality of steel sheets used in the set of sheets include at least one steel sheet having a Si content of 0.5 mass% or more.

When the Si content is less than 0.5 mass%, LME cracking may not occur regardless of disturbances or other welding conditions. The reason for this is unclear but is probably explained as follows. It is believed that silicon has an effect of expanding a liquid-solid coexistence region in a phase diagram, and the addition of Si delays the solidification of Zn in the cooling process during welding. As a result of this, liquid Zn will stay long and LME cracking will be more likely to occur due to interaction with local tensile stress produced during holding or upon release of the electrodes. When the Si content is low, the interaction between liquid Zn and tensile stress is unlikely to occur, and LME cracking may be avoided depending on welding conditions even when the welding conditions are other than those used in the method of the present invention. Thus, the present invention considers LME cracking that occurs when the Si content is 0.5 mass% or more. It is therefore preferable that at least one of the steel sheets used in the set of sheets have a steel sheet chemical composition within the range described later and have a Si content of 0.5 mass% or more.

The welding method of the present invention promotes the alloying of Zn present between all of the overlapped steel sheets. Thus, all of the steel sheets used in the set of sheets may have a Si content of 0.5 mass% or more.

### [Difference in strength between the steel sheets]

As already described, a significant difference in strength between overlapped steel sheets gives rise to easy occurrence of LME cracking due to tensile stress stemming from different transformation behaviors during the cooling process in welding. Thus, in the present invention, it is preferable that the two or more overlapped steel sheets have a maximum difference in tensile strength TS between any two steel sheets in contact with each other in the vertical direction (hereinafter, written as "ΔTS_{Max}") of 200 MPa or more. When the ΔTS_{Max} is less than 200 MPa, the different transformation behaviors during cooling are unlikely to produce tensile stress, and LME cracking may be avoided depending on welding conditions even when the welding conditions are other than those used in the method of the present invention.

Thus, it is preferable that the set of sheets have at least one pair of steel sheets where the ΔTS_{Max} is 200 MPa or more. In this case, the advantageous effects of the present invention can be obtained more effectively because LME cracking can be suppressed even when the set of sheets has a factor that increases the probability of LME cracking, and a higher degree of freedom is available in designing automobile structures.

Since the advantageous effects of the present invention can be obtained more effectively as the ΔTS_{Max} is larger, the upper limit of ΔTS_{Max} is not particularly specified. From the point of view of the practical strength level of automotive steel sheets, the ΔTS_{Max} is preferably 2000 MPa or less. The ΔTS_{Max} is more preferably 250 MPa or more, and is more preferably 1800 MPa or less.

### [Tensile strength of the steel sheets]

LME cracking is likely to occur in high strength steel sheets. Thus, in the present invention, it is preferable that at least one of the two or more overlapped steel sheets have a tensile strength of 980 MPa or more. In this case, the advantageous effects of the present invention can be obtained more effectively because high strength steel sheets can be used while suppressing the occurrence of LME cracking and such effects as enhancements in crash properties of the welded members can be expected. The tensile strength of the steel sheet is preferably 3000 MPa or less.

### [Chemical composition of the steel sheets]

The chemical composition of the high strength steel sheets used in the present invention is not particularly limited as long as the steel sheets can form a weld having the configurations described above. In order to apply the present invention to structural parts for automobiles, the steel sheets preferably have a chemical composition described below. In the following description, "%" in the chemical composition means "mass%" unless otherwise specified.

### C: 0.01 to 0.40%

Carbon is an element that contributes to increasing the strength of steel sheets. Thus, the C content is preferably 0.01% or more. The C content is more preferably 0.02% or more. On the other hand, excessive addition of carbon causes excessive hardening of the weld and causes a decrease in the toughness of the weld. Thus, the C content is preferably 0.40% or less. The C content is more preferably 0.38% or less.

### Si: 0.02 to 2.50%

Silicon is an element that is effective in enhancing the strength and the elongation of steel sheets. Thus, the Si content is preferably 0.02% or more. The Si content is more preferably 0.10% or more. On the other hand, excessive addition of silicon causes a decrease in LME resistance and a decrease in coatability. Thus, the Si content is preferably 2.50% or less. The Si content is more preferably 2.00% or less.

### Mn: 1.0 to 5.0%

Manganese is an element that contributes to increasing the strength of steel sheets. Thus, the Mn content is preferably 1.0% or more. The Mn content is more preferably 1.2% or more. On the other hand, excessive addition of manganese promotes the solidification segregation of the alloying element in the nugget, causing a decrease in the toughness of the weld. Thus, the Mn content is preferably 5.0% or less. The Mn content is more preferably less than 3.5%.

### P: 0.050% or less

Excessive addition of phosphorus results in solidification segregation in the nugget and causes a decrease in the toughness of the weld. Thus, the P content is preferably 0.050% or less. The P content is more preferably 0.020% or less. The lower limit of the P content is not particularly specified, but excessive dephosphorization increases the steelmaking costs. Thus, the P content is preferably 0.005% or more.

### S: 0.100% or less

When the S content is high, solidification segregation occurs in the nugget and causes a decrease in the toughness of the weld. Thus, the S content is preferably 0.100% or less. The S content is more preferably 0.010% or less, and still more preferably 0.005% or less. The lower limit of the S content is not particularly specified, but excessive desulfurization increases the steelmaking costs. Thus, the S content is preferably 0.001% or more.

### Al: 0.010 to 1.000%

Aluminum is an element necessary for deoxidization. In order to obtain this effect, the Al content is desirably 0.010% or more. On the other hand, excessive addition of aluminum increases the amount of inclusions in the steel sheets to cause a decrease in local deformability and a decrease in the ductility of steel sheets. Thus, the upper limit of the Al content is preferably 1.000%. The Al content is more preferably 0.800% or less.

### N: 0.0100% or less

Nitrogen, by forming coarse nitrides, reduces local deformability and reduces the ductility of steel sheets. It is therefore desirable that the N content be low. The above tendency is noticeable when the N content is more than 0.0100%. Thus, the N content is preferably 0.0100% or less. The N content is more preferably 0.0075% or less. The lower limit of the N content is not particularly specified, but excessive denitrification increases the steelmaking costs. Thus, the N content is preferably 0.0001% or more.

The above elements are the basic components in the chemical composition, and the balance includes Fe and unavoidable impurities. Examples of the unavoidable impurities include Co, Sn, and Zn. The acceptable ranges of their contents are Co: 0.05% or less, Sn: 0.01% or less, and Zn: 0.01% or less.

In the present invention, where necessary, the chemical composition may include, in addition to the basic components described above, one, or two or more selected from the components described below. Incidentally, titanium, boron, niobium, chromium, nickel, molybdenum, copper, antimony, vanadium, calcium, and REM are optional components and the contents of these components may be 0%. In other words, the contents of these components are preferably 0% or more.

### Ti: 0.1% or less

Titanium, by forming fine carbonitride, is effective for precipitation hardening of steel sheets. When titanium is added in order to produce this effect, it is preferable that the Ti content be 0.005% or more. On the other hand, titanium added in a large amount causes a significant decrease in elongation. Thus, the Ti content is preferably 0.1% or less. The Ti content is more preferably 0.065% or less.

### B: 0.010% or less

Boron is an element that enhances the hardenability of steel sheets and contributes to increasing the strength. When boron is added to produce these effects, it is preferable that the B content be 0.0002% or more. On the other hand, the effects are saturated even when more than 0.010% boron is added. Thus, the B content is preferably 0.010% or less. The B content is preferably 0.008% or less.

### Nb: 0.1% or less

Niobium, by forming fine carbonitride, is effective for precipitation hardening of steel sheets. When niobium is added in order to produce this effect, it is preferable that the Nb content be 0.005% or more. On the other hand, adding a large amount of Nb not only causes a significant decrease in elongation but also causes slab cracking after continuous casting. Thus, the Nb content is preferably 0.1% or less. The Nb content is more preferably 0.07% or less, and still more preferably 0.055% or less.

### Cr: 1.0% or less

Chromium is an element that facilitates the formation of martensite in resistance welds and thereby contributes to increasing the shear tensile strength. When chromium is added in order to produce this effect, it is preferable that the Cr content be 0.05% or more. On the other hand, more than 1.0% chromium facilitates the occurrence of plane defects. Thus, the Cr content is preferably 1.0% or less. The Cr content is preferably 0.8% or less.

### Ni: 0.50% or less

Nickel is an element that contributes to increasing the strength of steel sheets through solid solution strengthening and transformation strengthening. When nickel is added to produce this effect, it is preferable that the Ni content be 0.005% or more. Nickel is effective when copper is added because the addition of nickel with copper at the same time effectively suppresses surface defects caused by copper. On the other hand, the effects are saturated even when more than 0.50% nickel is added. Thus, the Ni content is preferably 0.50% or less.

### Mo: 0.5% or less

Similarly to chromium, molybdenum is an element that facilitates the formation of martensite in resistance welds and thereby contributes to increasing the shear tensile strength. When molybdenum is added to produce this effect, it is desirable that the Mo content be 0.01% or more. The Mo content is preferably 0.02% or more. The effect is saturated even when more than 0.5% molybdenum is added, and such addition only increases the cost. Thus, the Mo content is preferably 0.5% or less. The Mo content is more preferably 0.42% or less.

### Cu: 1.0% or less

Copper is an element that contributes to solid solution strengthening of steel sheets. When copper is added to produce this effect, it is preferable that the Cu content be 0.005% or more. On the other hand, adding more than 1.0% copper results in saturated effect and increases the occurrence of surface defects caused by copper. Thus, the Cu content is preferably 1.0% or less.

### Sb: 0.20% or less

Antimony has an effect of suppressing the formation of a decarburized layer in a surface layer of a steel sheet, and thus can alleviate the loss of martensite on the steel sheet surface. When antimony is added to produce these effects, it is preferable that the Sb content be 0.001% or more. On the other hand, adding more than 0.20% antimony increases the rolling load and thereby lowers productivity. Thus, the Sb content is preferably 0.20% or less.

### V: 0.05% or less

Vanadium, by forming fine carbonitride, is effective for precipitation hardening of steel sheets. When vanadium is added in order to produce this effect, it is preferable that the V content be 0.005% or more. On the other hand, the strength increasing effect that is produced after the content exceeds 0.05% is small and such excessive addition of vanadium increases the alloying cost. Thus, the V content is preferably 0.05% or less.

### Ca: 0.05% or less and REM: 0.05% or less

Calcium and REM (rare earth metals) are elements that contribute to enhancing delayed fracture resistance by spheroidizing the shape of sulfides, and may be added as necessary. When these elements are added to produce the above effect, it is preferable that the Ca content and the REM content be each 0.0005% or more. On the other hand, the effect is saturated even when calcium and REM are added each in an amount more than 0.05%. Thus, the Ca content and the REM content are preferably each 0.05% or less.

### [Resistance spot welding methods]

An embodiment of a resistance spot welding method for producing the welded member of the present invention will be described.

The welded member of the present invention is produced by resistance spot welding in which a set of sheets including two or more overlapped steel sheets including at least one Zn-coated steel sheet described hereinabove is clamped between a pair of welding electrodes and is joined together by passing a current while applying an electrode force.

For example, as illustrated in Fig. 1, two steel sheets 1 and 2 are overlapped to form a set of sheets. Next, the set of sheets is clamped between a pair of welding electrodes 8 and 9 arranged on the upper and lower sides of the set of sheets, and a current is passed while applying a force from the welding electrodes and controlling the welding in accordance with the predetermined welding conditions. A weld 4 described hereinabove is thus formed between the steel sheets, specifically, at a steel sheet mating interface 7 between the steel sheets 1 and 2. The steel sheets can be thereby joined to each other. The set of sheets may include a steel sheet having a Zn coating layer (for example, a GI steel sheet, a GA steel sheet, or an EG steel sheet) and a steel sheet having no coating layers (for example, a cold rolled steel sheet). In this case, the steel sheets are overlapped in such a manner that the side having the Zn coating layer will be in contact with the cold rolled steel sheet.

The welding equipment used in the resistance spot welding method of the present invention may be one that is equipped with a pair of upper and lower welding electrodes and can freely control the electrode force and the welding current separately during the welding process. Configurations of the welding equipment, such as the electrode force application mechanism, the type, and the shape of welding electrodes, are not particularly limited. Examples of the electrode force application mechanisms include air cylinders and servo motors. Exemplary types include stationary types and robot guns. Examples of the types of welding electrode tips include DR type (dome radius type), R type (radius type), and D type (dome type) specified in JIS C9304: 1999. The tip diameter of the welding electrodes is, for example, 4 mm to 16 mm. The radius of curvature of the tips of the welding electrodes is, for example, 10 mm to 400 mm. The present invention is applicable to both DC and AC welding power supplies. In the case of AC, "current" means "effective current".

Next, the welding conditions of the present invention will be described.

As already described, an effective approach to promoting the Fe-Zn alloying between the sheets near the nugget is to promote the Fe-Zn interdiffusion by appropriate control of the heating pattern during energization.

In the resistance spot welding of the present invention, the heating pattern during the welding may be controlled through the main heating step alone. Alternatively, the heating pattern during the welding may be controlled through the main heating step and the posterior heating step. In particular, energization that combines the main heating step and the posterior heating step allows the steel sheets to be held at high temperatures where the Fe-Zn alloying proceeds, more stably for a long time as compared to energization by the main heating step alone. In the present invention, the "post-heating holding time (T_{Hold})" in the case of the first heating pattern described later indicates the "holding time after the end of energization in the main heating step", and the "post-heating holding time (T_{Hold})" in the case of the second heating pattern described later indicates the "holding time after the end of energization in the posterior heating step".

In the present invention, the main heating step refers to energization for forming the nugget, and the posterior heating step indicates post energization for performing heat post-treatment after the nugget is formed.

### [First heating pattern]

Here, the heating pattern of the present invention that includes only the main heating step is written as the "first heating pattern". An embodiment of the first heating pattern will be described below.

In the first heating pattern, the average current in the main heating step is I₁ (kA), the current passing time in the main heating step is T₁ (s: seconds), the average electrode force from the welding electrodes during the energization is p (kN), the post-heating holding time is T_{Hold} (s), and the number of steel sheets is N (sheets). The welding conditions in the main heating step are controlled so that the welding conditions in the main heating step and the post-heating holding time will satisfy the relationship of expression (4). 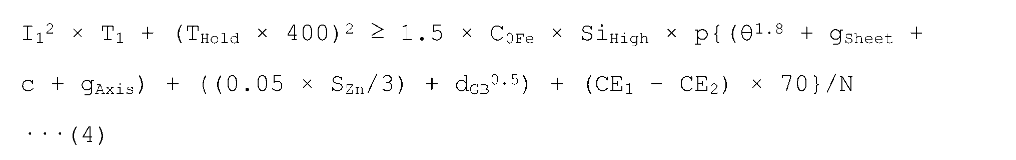 I12 × T1 + (THold × 400)2 ≥ 1.5 × C0Fe × SiHigh × p{(θ1.8 + gSheet + c + gAxis) + ((0.05 × SZn/3) + dGB0.5) + (CE1 - CE2) × 70}/N In expression (4), c is the gap (mm) between the welding electrode and the steel sheet that is outermost of the two or more overlapped steel sheets, and g_{Axis} is the amount of misalignment (mm) between the pair of welding electrodes.

When a current is passed under conditions that fail to satisfy expression (4), the steel sheets cannot be held at sufficient temperatures for a sufficient amount of time required for Fe-Zn interdiffusion during the energization. As a result, the Fe-Zn alloying between the sheets is insufficient and the C_{Fe} cannot be increased. As already described, the probability of LME cracking is more likely when the Si content in the steel sheets and the difference in transformation temperature between the steel sheets are large. Thus, it is effective to increase the lower limit of the left-side value of expression (4) (namely, "I₁² × T₁ + (T_{Hold} × 400)²") in accordance with Si_{High} and (CE₁ - CE₂).

For the reasons above, in the first heating pattern, the welding conditions in the main heating step are controlled so as to satisfy the relationship of expression (4). The left-side value of expression (4) is preferably equal to or greater than "right-side value of expression (4) × 1.05". Incidentally, the "right-side value of expression (4)" is the value of "1.5 × C_{0Fe} × Si_{High} × p{(θ^{1.8} + g_{Sheet} + c + g_{Axis}) + ((0.05 × S_{Zn}/3) + d_{GB}^{0.5}) + (CE₁ - CE₂) × 70}/N".

The upper limit of expression (4) is not particularly limited. In order to prevent significant splash due to excessive heat input and to prevent excessive increase in takt time in the automobile manufacturing process, the control of the welding conditions to satisfy expression (4) preferably also involves controlling I₁ to 15.0 kA or less and T₁ to 2.0 s or less. More preferably, I₁ is 3.0 kA or more, and T₁ is 0.2 s or more.

### [Second heating pattern]

Here, the heating pattern of the present invention that includes the main heating step and the posterior heating step is referred to as the "second heating pattern". An embodiment of the second heating pattern will be described below.

In the second heating pattern, the average current in the main heating step is I₁ (kA), the current passing time in the main heating step is T₁ (s), the average current in the posterior heating step is I₂ (kA), the current passing time in the posterior heating step is T₂ (s), and the number of current application by the posterior heating step is Nₚ (times). The current passing interval (the duration in which no current is passed) between the main heating step and the posterior heating step is T₃ (s), and the average electrode force from the welding electrodes during the energization is p (kN). The post-heating holding time is T_{Hold} (s), and the number of steel sheets is N (sheets). The welding conditions in the main heating step and the posterior heating step are controlled so that the welding conditions in the main heating step and the posterior heating step, and the post-heating holding time will satisfy the relationship of expression (5): 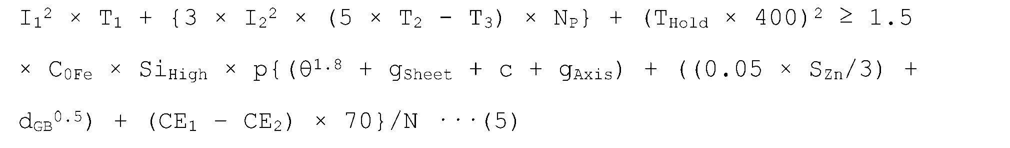 I12 × T1 + {3 × I22 × (5 × T2 - T3) × NP} + (THold × 400)2 ≥ 1.5 × C0Fe × SiHigh × p{(θ1.8 + gSheet + c + gAxis) + ((0.05 × SZn/3) + dGB0.5) + (CE1 - CE2) × 70}/N In expression (5), g_{Axis} is the amount of misalignment (mm) between the pair of welding electrodes, and c is the gap (mm) between the welding electrode and the steel sheet that is outermost of the two or more overlapped steel sheets.

When a current is passed under welding conditions that fail to satisfy expression (5), the steel sheets cannot be held at sufficient temperatures for a sufficient amount of time required for Fe-Zn interdiffusion. As a result, the Fe-Zn alloying between the sheets in the posterior heating step is insufficient and the C_{Fe} cannot be increased. As already described, the probability of LME cracking is more likely when the Si content in the steel sheets and the difference in equivalent carbon content between the steel sheets are large. In addition, the microstructures in the steel sheet surface layer, and the Zn coating also affect the sensitivity to LME cracking. Thus, the present inventors have come up with the idea that it is effective to increase the lower limit of the left-side value of expression (5) in accordance with Si_{High}, (CE₁ - CE₂), C_{0Fe}, S_{Zn}, and d_{GB}.

For the above reasons, in the second heating pattern, the welding conditions in the main heating step and the posterior heating step are controlled so as to satisfy the relationship of expression (5). The left-side value of expression (5) is preferably equal to or greater than "right-side value of expression (5) × 1.05". Incidentally, the "right-side value of expression (5)" is the value of "1.5 × C_{0Fe} × Si_{High} × p{(θ^{1.8} + g_{Sheet} + c + g_{Axis}) + ((0.05 × S_{Zn}/3) + d_{GB}^{0.5}) + (CE₁ - CE₂) × 70}/N".

The upper limit of expression (5) is not particularly limited. In order to prevent significant splash due to excessive heat input and to prevent excessive increase in takt time in the automobile manufacturing process, the control of the welding conditions in the main heating step and the posterior heating step to satisfy expression (5) preferably also involves controlling each of I₁ and I₂ to 15.0 kA or less, and the total of T₁ and T₂ to 2.0 s or less. More preferably, I₁ and I₂ are each 3.0 kA or more, and the total of T₁ and T₂ is 0.2 s or more.

### [Electrode holding time]

After the main heating step in the first heating pattern or the posterior heating step in the second heating pattern is completed, the electrodes are held for a predetermined time (i.e., holding time). This holding time is 0.02 to 1.00 s. By holding the welding electrodes at a constant electrode force after the completion of energization, the occurrence of blowholes in the nugget and an excessive increase in takt time are reduced. The holding time is preferably 0.05 s or more, and is preferably 0.50 s or less.

### [Non-energization step]

In the second heating pattern, a non-energization step of suspending current supply may be performed between the main heating step and the posterior heating step. When the non-energization step is added, it is preferable that the non-energization step and the posterior heating step be repeated after the main heating step. In this manner, the advantageous effects of the present invention can be obtained more effectively.

In expression (5), "T₃ (s)" indicates the non-energization time in the non-energization step. When the non-energization step is not added, T₃ (s) in expression (5) is 0. In expression (5), "N_{P} (times)" indicates the number of repetitions.

In order to ensure that the posterior heating step promotes the Fe-Zn interdiffusion while suppressing the splash due to the remelting of the nugget and thereby increases the C_{Fe}, it is effective to maintain the vicinity of the nugget at a constant temperature range after the completion of the main heating step. Thus, in the present invention, it is preferable that the non-energization step be provided as a current passing interval between the main heating step and the posterior heating step.

When the posterior heating step is performed at a constant current, the temperature near the nugget gradually increases if the current in the posterior heating step is high, and, on the other hand, the temperature near the nugget gradually falls if the current in the posterior heating step is low. The desired effects will be obtained even in such a state as long as the current in the posterior heating step is set appropriately. However, the calculation of optimal conditions often involves an increased number of man-hours.

Furthermore, holding in a constant temperature range requires strict control of conditions, and the conditions are more difficult to control when the welding process is accompanied by working disturbances described later. On the other hand, repeating the non-energization step and the posterior heating step allows the temperature near the nugget to be kept within a relatively constant range, although the repetition increases the total current passing time in the posterior heating steps.

For these reasons, the second heating pattern of the present invention may be such that the non-energization step is performed after the main heating step, and the non-energization step and the posterior heating step are repeated. In this manner, the temperature near the nugget can be readily held in a constant temperature range, and also the appropriate current range in the posterior heating step is extended. Thus, the robustness against working disturbances during the welding process will be enhanced. When the non-energization time is too short, there is a concern that the occurrence of splash will be increased due to the remelting of the nugget. When, on the other hand, the non-energization time is too long, the desired heat treatment effects may not be obtained. Thus, the amount of time in the non-energization step is preferably 0.01 s or more, and is preferably 0.20 s or less.

The non-energization step and the posterior heating step are to be performed at least once. When the non-energization step and the posterior heating step are repeated, the number of repetitions is more preferably two or more, and still more preferably three or more. The upper limit of the number of repetitions is not particularly specified. However, the number of repetitions feasible in a welding equipment is generally limited, and setting the number of repetitions beyond the upper limit requires modification of the welding equipment and will increase equipment costs associated with the automobile manufacturing process. Thus, the number of repetitions is preferably 20 or less, and still more preferably 10 or less.

### [Working disturbances during the welding process]

The present invention may satisfy the following welding conditions in addition to the welding conditions in the steps described above.

As already described, LME cracking occurs easily in the presence of working disturbances during the welding process. Thus, the main heating step is preferably performed in a state where at least one welding spot immediately before the electrode force is applied by the welding electrodes satisfies one, or two or more selected from (a) to (d) below. In this case, the advantageous effects of the present invention can be obtained more effectively.
(a) The electrode angle between the welding electrodes and the two or more overlapped steel sheets is 0.2 degrees or more.
(b) A gap of 0.5 mm or more is present between at least one pair of steel sheets among the two or more overlapped steel sheets.
(c) A gap of 0.5 mm or more is present between any of the welding electrodes and the steel sheet that is outermost of the two or more overlapped steel sheets.
(d) The amount of misalignment between the pair of welding electrodes is 0.1 mm or more.

All of these working disturbances in the welding process cause a local increase in temperature and/or tensile stress at the weld when the electrodes are released, thus facilitating the occurrence of LME cracking. By optimizing the C_{Fe}, the present invention can suppress the occurrence of LME cracking even in the presence of these working disturbances in the welding process, and thus increases the margin of tolerance for managing the working disturbances in the manufacturing of members. Details of each of the working disturbances will be described below.

(a) The electrode angle between the welding electrodes and the two or more overlapped steel sheets is 0.2 degrees or more.

The electrode angle means the angle at which the electrodes are inclined with respect to the steel sheets, that is, the "angle between the direction in which the electrode force is applied and the thickness direction of the steel sheets". When the electrode angle is large, a bending stress is applied to the weld to produce a large compressive plastic deformation locally, and consequently the tensile stress after cooling is increased.

When the steel sheets are welded in the presence of an electrode angle, the nugget that is formed is also inclined. Thus, when the electrode angle is determined from a cross section after welding, the inclination of the nugget is taken as the electrode angle. That is, although the "electrode angle" is one of the working disturbances encountered during the welding process, the "inclination of the nugget" in the member obtained after welding may be used as the "electrode angle" for the reason above.

The "inclination of the nugget", indicated by "θ", is determined as illustrated in Fig. 5. Referring to Fig. 5, the left and right shoulders on the upper sheet 1 (namely, the outermost steel sheet in the set of sheets) are connected to each other by a straight line passing through the outermost parts of the shoulders (namely, the boundaries between the deformation due to the force from the welding electrode and the non-deformed portion), and this straight line is used as the reference. Two perpendicular lines are drawn from positions 500 µm away to the left and the right from the center of this straight line as the reference (hereinafter, written as the "reference line"). A straight line is drawn that passes through the intersections of the two perpendicular lines and the outermost edge of the nugget (namely, the outer periphery of the nugget 4a). The angle between this straight line and the reference line is defined as θ. The above "two perpendicular lines" are parallel to the midline drawn from a position at the center of the reference line. The advantageous effects of the present invention can be obtained effectively when the electrode angle is 0.2 degrees or more. When the electrode angle is too large, the nugget formation becomes unstable and splash may be caused. Thus, the electrode angle is favorably 10.0 degrees or less. The electrode angle is more preferably 1.0 degree or more, and is more preferably 8.0 degrees or less.

(b) A gap of 0.5 mm or more is present between at least one pair of steel sheets among the two or more overlapped steel sheets.

The steel sheets are deformed during welding. Thus, any gap between the steel sheets may change before and after welding. In the case where a gap is present between steel sheets in a cross section after welding, it is highly probable that there has been a gap between the steel sheets already before they are welded. Thus, when any gap between the steel sheets is determined from a cross section after welding, the gap present between the steel sheets after welding is assumed to be a gap present between the steel sheets before welding. That is, although the "gap between the steel sheets" described in (b) above is one of the working disturbances encountered during the welding process, the "gap present between the steel sheets after welding" in the member obtained after welding may be used as the "gap between the steel sheets" for the reason described above.

The "g_{Sheet}" indicating the "gap present between the steel sheets after welding" is determined as illustrated in Figs. 6(A) and 6(B). In the case of serial spot welding, as illustrated in Fig. 6(A), the g_{Sheet} is the difference between the maximum thickness of the steel sheets 1 and 2 between two adjacent nuggets 4a and the total sheet thickness of the overlapped steel sheets 1 and 2 (namely, the difference is a sheet-to-sheet gap 10). In other cases (for example, the case illustrated in Fig. 6(B)), the g_{Sheet} is the difference between the maximum thickness of the steel sheets 1 and 2 from the nugget 4a to the end of the set of sheets and the total sheet thickness of the overlapped steel sheets 1 and 2.

The advantageous effects of the present invention can be obtained effectively when the amount of gap is 0.5 mm or more. When the amount of gap is too large, the nugget formation becomes unstable and splash may be caused. Thus, the amount of gap is favorably 4.0 mm or less. The amount of gap is more preferably 1.0 mm or more, and is more preferably 3.0 mm or less.

(c) A gap of 0.5 mm or more is present between any of the welding electrodes and the steel sheet that is outermost of the two or more overlapped steel sheets.

Similarly to (b), when there is a gap between any of the welding electrodes and the steel sheet immediately before the start of electrode force application, the steel sheet undergoes bending deformation and a bending stress is applied to the weld, thus facilitating the occurrence of LME cracking. The presence of a gap between any of the welding electrodes and the steel sheet immediately before the start of electrode force application will be discussed assuming that, for example, one of the electrodes is movable (hereinafter, written as the "movable electrode") and the other electrode is fixed (hereinafter, written as the "fixed electrode"). When there is a gap between the fixed electrode and the steel sheet, the steel sheet undergoes bending deformation upon start of electrode force application by the movable electrode. The consequent bending stress to the weld facilitates the occurrence of LME cracking. The amount of gap between the welding electrode and the steel sheet is designated by c. The advantageous effects of the present invention can be obtained effectively when the amount of gap is 0.5 mm or more. When the amount of gap is too large, the nugget formation becomes unstable and splash may be caused. Thus, the amount of gap is favorably 5.0 mm or less. The amount of gap is more preferably 1.0 mm or more, and is more preferably 3.0 mm or less.

As long as the values of welding disturbances in expression (4) are within the preferred ranges described above and below and welding is performed under conditions that satisfies expression (4), the effect of the welding disturbance described in (c) on LME cracking will be small. Furthermore, the effect of the welding disturbance described in (c) on expression (1) will be also small.

(d) The amount of misalignment between the pair of welding electrodes is 0.1 mm or more.

Misalignment means a state in which the central axes of the pair of welding electrodes are not aligned. The amount of this misalignment between the pair of welding electrodes is written as g_{Axis}. Similarly to the electrode angle described above, a large misalignment leads to a bending stress applied to the weld, thus facilitating the occurrence of LME cracking. The advantageous effects of the present invention can be obtained effectively when the amount of misalignment is 0.1 mm or more. When the amount of misalignment is too large, the nugget formation becomes unstable and splash may be caused. Thus, the amount of misalignment is favorably 5.0 mm or less. The amount of misalignment is more preferably 0.2 mm or more, and is more preferably 3.0 mm or less.

As long as the values of welding disturbances in expression (4) are within the preferred ranges described above and welding is performed under conditions that satisfies expression (4), the effect of the welding disturbance described in (d) on LME cracking will be small. Thus, in expression (1), the advantageous effects of the present invention can be obtained even if the welding disturbance described in (d) is ignored.

In the present invention, the electrode force application conditions in each step are not particularly limited. From the point of view of automotive applications, it is preferable that the electrode force be controlled to a range of 2.0 to 8.0 kN.

### EXAMPLES

The functions and effects of the present invention will be described below based on Examples. The present invention is not limited to the following Examples.

Sets of sheets were prepared using steel sheets described in Table 1. The sets of sheets were then welded under welding conditions described in Tables 2 and 3 to produce welded joints (welded members). In the sets of sheets, as described in Table 2, the steel sheets were overlapped in the order of lower sheet and upper sheet, or in the order of lower sheet, intermediate sheet, and upper sheet. The welding equipment used was a servo motor pressure type single-phase AC (here, 50 Hz) resistance welding machine attached to a welding gun. The pair of electrode tips that were used were chromium copper DR type electrodes with a tip radius of curvature R of 40 mm and a tip diameter of 6 mm.

In the column "Coating" in Table 1, "GI" indicates a steel sheet having a hot-dip galvanized layer (i.e., a hot-dip galvanized steel sheet), "GA" refers to a steel sheet having a hot-dip galvannealed layer (i.e., a hot-dip galvannealed steel sheet), "EG" indicates a steel sheet having an electrogalvanized layer (i.e., an electrogalvanized steel sheet), and "-" refers to a steel sheet having no coating layers (here, a cold rolled steel sheet).

The chemical compositions described in Table 1 were measured by inductively coupled plasma (ICP) atomic emission spectroscopy.

The column "Tensile strength" in Table 1 indicates the tensile strength (TS) (unit: MPa) measured by a tensile test in accordance with JIS Z2241 on a JIS No. 5 test piece for tensile test sampled from each steel sheet in the rolling direction.

The column "Grain boundary density" in Table 1 indicates the grain boundary density in the outermost layer of the base metal of each steel sheet. The grain boundary density was measured by an electron back-scatter diffraction (EBSD) method. A high-angle grain boundary with a misorientation of 15° or more was defined as a grain boundary, and an IQ Map showing grain boundaries was created. Next, in the created IQ Map, the number of grain boundaries in the outermost layer of the base metal was counted. The grain boundary density was determined with respect to each of five fields of view with a size of at least 50 µm × 40 µm. The measured values of the fields of view were averaged to give d_{GB}. The "d_{GB}" described in Table 2 is the grain boundary density (unit: boundaries/mm) in the outermost layer of the base metal of the steel sheet having a higher tensile strength in the first pair of sheets.

The "Fe concentration" described in the column "Coating" in Table 1 was measured in the same manner as the concentration C_{Fe} described later. The "Coating weight" was measured using glow discharge spectroscopy (GDS). The "S_{Zn}" described in Table 2 indicates the coating weight in the Zn-coated steel sheet having the highest coating weight among the overlapped steel sheets.

The symbols in the column "Working disturbances" in Table 3 correspond to (a) to (d) described as the working disturbances encountered in the welding process.

The "N_{P}" described in the column "Welding conditions" in Table 3 indicates the number of repetitions of the non-energization step and the posterior heating step. When, for example, the "main heating step alone" was performed, N_{P} is 0 (times). When, for example, the steps were "main heating step - non-energization step - posterior heating step", N_{P} is 1 (time). When, for example, the steps were "main heating step - non-energization step (1) - posterior heating step (1) - non-energization step (2) - posterior heating step (2)", N_{P} is 2 (times). As described above, the number of non-energization steps is the same as N_{P}.

The welded members obtained were analyzed by the methods described below to measure the Fe concentration (C_{Fe}) in the Fe-Zn alloy layer in the Zn alloy layer and to evaluate LME cracking of the weld.

### <Measurement of C_{Fe}>

The C_{Fe} may be measured by any method without limitation as long as the Fe concentration can be quantitatively measured. For example, the measurement is possible by EPMA or SEM-EDS. Here, as an example, the measurement was made by SEM-EDS. The SEM-EDS conditions were as follows.
EDS conditions: X-ray source: Ka radiation source,
magnification: at least 1500 times, acceleration voltage: 15
kV, scan time: at least 1 min
Gaps are excluded from the measurement. Specifically, the thickness of a gap is subtracted from the thickness including the gap. When the thickness of a gap is difficult to determine, the measurement is made at the closest adjacent portion without a gap.

As illustrated in Figs. 2(A) and 3(A), the observation region was the region extending from A to B (i.e., the first region) on the steel sheet mating interface 7 in the weld where an Fe-Zn alloy layer had been formed.

Here, the observation started at the position A 300 µm away from the nugget end E in the sheet width direction (specifically, the side of the first region that is perpendicular to the steel sheet mating interface 7 and is located on the left side of the paper in the figure) and ended at the position B 700 µm away from the nugget end E in the sheet width direction (specifically, the side of the first region that is perpendicular to the steel sheet mating interface 7 and is located on the right side of the paper in the figure). The region from the start point to the end point is observed at regular intervals. The Zn-enriched portion between the sheets in each field of view is identified as the Fe-Zn alloy layer, and the Fe concentration in the Fe-Zn alloy layer is measured. The "Zn-enriched portion" is identified from the contrast in the composition image (COMPO image). As illustrated in each figure, the Fe concentration was measured at a position corresponding to 1/4 of the thickness of the Fe-Zn alloy layer. The values of Fe concentration obtained, excluding the maximum and minimum values, were averaged to give the Fe concentration (C_{Fe}) in the Fe-Zn alloy layer.

The above phrase "observed at regular intervals" indicates that at least 10 fields of view are observed at regular intervals. The number of fields of view may be appropriately set within the range of, for example, 11 to 100. When the measurement intervals are less than 10, accurate data may not be obtained. Thus, the intervals in Examples were set to 10 fields of view. The "Fe concentration" and the "Zn concentration" were measured by the following analytical method. Incidentally, Figs. 2(A) and 3(A) are schematic views for explanatory purposes and illustrate 6 intervals for ease of viewing.

For example, the concentration may be measured by line analysis or point analysis. When such an analysis is used for the concentration measurement, the concentration is measured with respect to at least five lines per field of view. The concentration is measured at each line, and the results are averaged to give the concentration in that field of view. The measured values of all fields of view, excluding the maximum and minimum values, are averaged to give C_{Fe}. In the case of point analysis, it is preferable to measure the concentration at intervals of 1 µm or less per site.

As already described, the regions for C_{Fe} measurement are present on both end sides of the nugget. When the nugget was not inclined, the C_{Fe} on either side was measured. When the nugget was inclined, the C_{Fe} on the side opposite to the inclined side was measured.

### <Evaluation of LME cracking>

The center of the weld of the welded member obtained was cut with a micro cutter, and the cross section of the weld was observed to determine the presence or absence of LME cracking. Specifically, five welded members were produced under welding conditions described in Table 2 or 3, and the presence or absence of LME cracking between the sheets (i.e., at the steel sheet mating interface) was determined. The cracking was evaluated according to the evaluation criteria described below. The results are described in Table 3. Here, the welded member was judged as "acceptable" when the evaluation result was rated as A or B.

### <Evaluation criteria>

Rating A: 0/5 (i.e., cracking was present in 0 welded member out of the five welded members.)
Rating B: 1/5 (i.e., cracking was present in 1 welded member out of the five welded members.)
Rating C: 2/5 to 4/5 (i.e., cracking was present in 2 to 4 welded members out of the five welded members.)

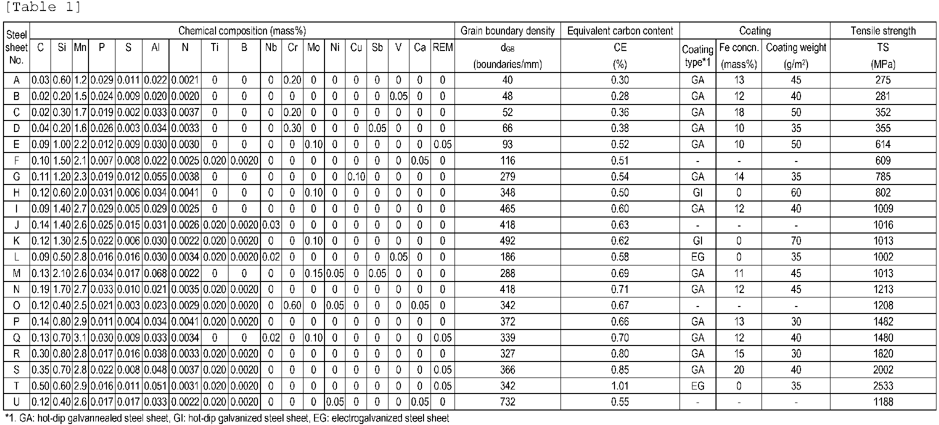

**[Table 2]**

| No. | Set of sheets | | | | | | | | | | | | Fe-Zn alloy layer | | | Remarks |
|---|---|---|---|---|---|---|---|---|---|---|---|---|---|---|---|---|
| | N | Upper sheet | Intermediate sheet | Lower sheet | N_{Si≥0.5} | ΔTS_{Max} | CE₁ | CE₂ | Si_{High} | C_{0Fe} | S_{Zn} | d_{GB} | C_{Fe} | Right-side value of exp. (2) | \|m\| | |
| | (sheets) | Steel sheet No. | Steel sheet No. | Steel sheet No. | (sheets) | (MPa) | (mass%) | (mass%) | (mass%) | (mass%) | (g/m²) | (boundaries/mm) | (mass%) | | | |
| 1 | 3 | Q | B | Q | 2 | 1199 | 0.70 | 0.28 | 0.7 | 12 | 40 | 339 | 83.1 | 81.9 | 0.07 | Inv. Ex. |
| 2 | 3 | P | H | P | 3 | 680 | 0.66 | 0.50 | 0.8 | 13 | 60 | 372 | 85.1 | 78.6 | 0.06 | Inv. Ex. |
| 3 | 3 | O | N | B | 1 | 932 | 0.71 | 0.28 | 1.7 | 12 | 45 | 418 | 96.2 | 94.3 | 0.07 | Inv. Ex. |
| 4 | 3 | N | F | N | 3 | 604 | 0.71 | 0.51 | 1.7 | 12 | 45 | 418 | 90.1 | 83.1 | 0.02 | Inv. Ex. |
| 5 | 3 | L | B | L | 2 | 721 | 0.58 | 0.28 | 0.5 | 12 | 40 | 186 | 88.0 | 82.2 | 0.08 | Inv. Ex. |
| 6 | 3 | K | A | K | 3 | 738 | 0.62 | 0.30 | 1.3 | 13 | 70 | 492 | 86.6 | 85.8 | 0.07 | Inv. Ex. |
| 7 | 3 | J | B | J | 2 | 735 | 0.63 | 0.28 | 1.4 | 12 | 40 | 418 | 86.5 | 84.9 | 0.04 | Inv. Ex. |
| 8 | 3 | I | C | I | 2 | 657 | 0.60 | 0.36 | 1.4 | 18 | 50 | 465 | 88.0 | 88.8 | 0.08 | Comp. Ex. |
| 9 | 3 | H | B | H | 2 | 521 | 0.50 | 0.28 | 0.6 | 12 | 60 | 348 | 87.9 | 77.8 | 0.06 | Inv. Ex. |
| 10 | 3 | G | A | G | 3 | 510 | 0.54 | 0.30 | 1.2 | 14 | 45 | 279 | 77.8 | 77.3 | 0.11 | Comp. Ex. |
| 11 | 3 | F | B | F | 2 | 328 | 0.51 | 0.28 | 1.5 | 12 | 40 | 116 | 90.1 | 80.8 | 0.04 | Inv. Ex. |
| 12 | 3 | E | A | E | 3 | 339 | 0.52 | 0.30 | 1.0 | 13 | 50 | 93 | 83.0 | 77.3 | 0.09 | Inv. Ex. |
| 13 | 3 | Q | B | L | 2 | 1199 | 0.70 | 0.28 | 0.7 | 12 | 40 | 339 | 88.8 | 85.5 | 0.05 | Inv. Ex. |
| 14 | 3 | P | C | J | 2 | 1130 | 0.66 | 0.36 | 0.8 | 18 | 50 | 372 | 84.9 | 79.4 | 0.08 | Inv. Ex. |
| 15 | 3 | B | L | H | 2 | 721 | 0.58 | 0.28 | 0.5 | 12 | 60 | 186 | 77.0 | 74.2 | 0.08 | Inv. Ex. |
| 16 | 3 | K | D | F | 2 | 658 | 0.62 | 0.38 | 1.3 | 10 | 70 | 492 | 86.6 | 80.5 | 0.06 | Inv. Ex. |
| 17 | 3 | M | A | M | 3 | 738 | 0.69 | 0.30 | 2.1 | 13 | 45 | 288 | 94.7 | 94.1 | 0.05 | Inv. Ex. |
| 18 | 3 | R | B | R | 2 | 1539 | 0.80 | 0.28 | 0.8 | 15 | 40 | 327 | 77.5 | 78.4 | 0.06 | Comp. Ex. |
| 19 | 3 | S | B | S | 2 | 1721 | 0.85 | 0.28 | 0.7 | 20 | 40 | 366 | 85.5 | 86.2 | 0.07 | Comp. Ex. |
| 20 | 2 | L | - | A | 2 | 727 | 0.58 | 0.30 | 0.6 | 13 | 45 | 186 | 93.1 | 81.9 | 0.03 | Inv. Ex. |
| 21 | 2 | K | - | C | 1 | 661 | 0.62 | 0.36 | 1.3 | 18 | 70 | 492 | 84.4 | 83.7 | 0.07 | Inv. Ex. |
| 22 | 2 | J | - | B | 1 | 735 | 0.63 | 0.28 | 1.4 | 12 | 40 | 418 | 88.6 | 91.4 | 0.07 | Comp. Ex. |
| 23 | 2 | I | - | D | 1 | 654 | 0.60 | 0.38 | 1.4 | 12 | 40 | 465 | 79.9 | 77.6 | 0.05 | Inv. Ex. |
| 24 | 2 | Q | - | C | 1 | 1128 | 0.70 | 0.36 | 0.7 | 18 | 50 | 339 | 74.9 | 77.2 | 0.08 | Comp. Ex. |
| 25 | 2 | P | - | F | 2 | 873 | 0.66 | 0.51 | 1.5 | 13 | 30 | 372 | 83.5 | 78.9 | 0.06 | Inv. Ex. |
| 26 | 2 | U | - | A | 1 | 1188 | 0.55 | 0.30 | 0.6 | 13 | 45 | 732 | 84.1 | 80.6 | 0.06 | Inv. Ex. |
| 27 | 2 | N | - | E | 2 | 599 | 0.71 | 0.52 | 1.7 | 12 | 50 | 418 | 86.3 | 78.9 | 0.02 | Inv. Ex. |
| 28 | 2 | T | - | A | 2 | 2533 | 1.01 | 0.30 | 0.6 | 13 | 45 | 342 | 85.2 | 82.5 | 0.08 | Inv. Ex. |
| 29 | 2 | K | - | C | 1 | 661 | 0.62 | 0.36 | 1.3 | 18 | 70 | 492 | 92.7 | 90.4 | 0.07 | Inv. Ex. |
| 30 | 2 | M | - | E | 2 | 399 | 0.69 | 0.52 | 2.1 | 11 | 50 | 288 | 78.5 | 83.6 | 0.06 | Comp. Ex. |
| 31 | 2 | I | - | D | 1 | 654 | 0.60 | 0.38 | 1.4 | 12 | 40 | 465 | 71.8 | 78.4 | 0.11 | Comp. Ex. |
| 32 | 2 | H | - | A | 2 | 527 | 0.50 | 0.30 | 0.6 | 13 | 60 | 348 | 81.5 | 79.3 | 0.08 | Inv. Ex. |
| 33 | 2 | G | - | C | 1 | 433 | 0.54 | 0.36 | 1.2 | 18 | 50 | 279 | 78.9 | 77.9 | 0.03 | Inv. Ex. |
| 34 | 2 | M | - | B | 1 | 732 | 0.69 | 0.28 | 2.1 | 12 | 45 | 288 | 91.2 | 97.1 | 0.05 | Comp. Ex. |
| 35 | 2 | Q | - | D | 1 | 1125 | 0.70 | 0.38 | 0.7 | 12 | 40 | 339 | 93.6 | 84.5 | 0.05 | Inv. Ex. |
| 36 | 2 | R | - | B | 1 | 1539 | 0.80 | 0.28 | 0.8 | 15 | 40 | 327 | 74.1 | 79.0 | 0.07 | Comp. Ex. |
| 37 | 2 | S | - | D | 1 | 1647 | 0.85 | 0.38 | 0.7 | 20 | 40 | 366 | 88.4 | 83.0 | 0.05 | Inv. Ex. |
| 38 | 2 | N | - | A | 2 | 938 | 0.71 | 0.30 | 1.7 | 13 | 45 | 418 | 92.4 | 90.6 | 0.07 | Inv. Ex. |
| 39 | 2 | O | - | C | 0 | 856 | 0.67 | 0.36 | 0.4 | 18 | 50 | 342 | 79.9 | 76.9 | 0.07 | Inv. Ex. |
| 40 | 2 | O | - | M | 1 | 195 | 0.69 | 0.67 | 2.1 | 11 | 45 | 342 | 73.1 | 70.7 | 0.05 | Inv. Ex. |

| | | | | | | | | | | | | | | | | |
|---|---|---|---|---|---|---|---|---|---|---|---|---|---|---|---|---|
| *1. 98≥C_{Fe} ...(1) *2. C_{Fe}≥{25×Si_{High}×(CE₁-CE₂)}+{θ+(g_{Sheet}/1.2)}+[{(S_{Zn}×d_{GB})^{0.5}}/30]+{60+(Core/3)} ...(2) *3. \|m\|≤0.10 ...(3) | | | | | | | | | | | | | | | | |

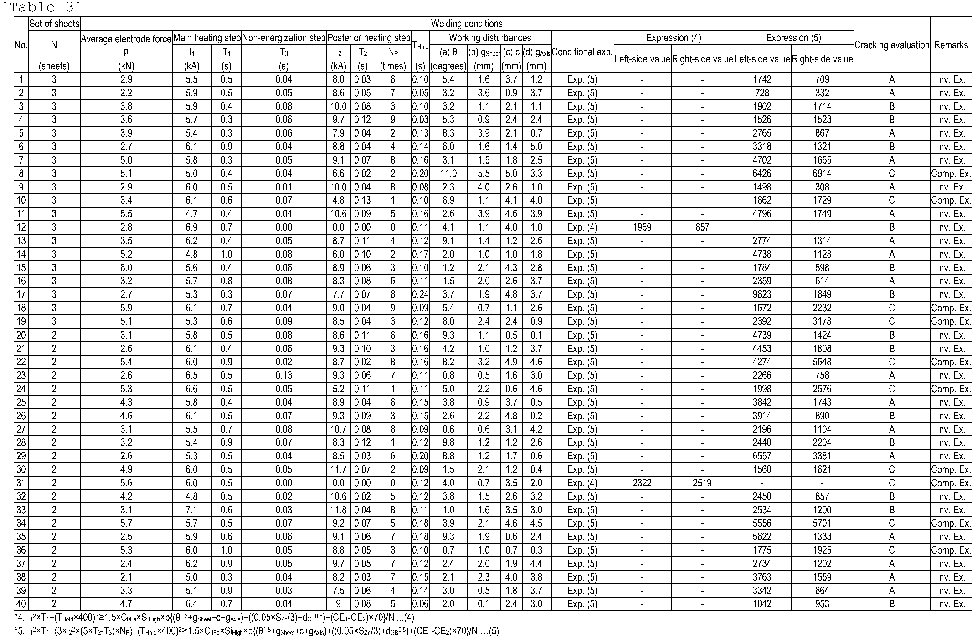

As described in Tables 2 and 3, the welded members of Inventive Examples were all acceptable in the LEM cracking evaluation and were shown to be resistant to LME cracking.

### Reference Signs List

1, 2, 3 steel sheet
4 weld
4a nugget
4b weld heat affected zone
5 Fe-Zn alloy layer
6 resistance spot welded member
7 steel sheet mating interface
8, 9 welding electrode
10 sheet-to-sheet gap

## Claims

1. A resistance spot welded member comprising two or more overlapped steel sheets resistance spot welded to one another, wherein
the two or more overlapped steel sheets include one or more Zn-coated steel sheets,
in a pair or pairs in which two of the steel sheets are in contact with each other in a vertical direction while having a Zn coating between the steel sheets, the pair having the largest difference in tensile strength is defined as a first pair of sheets,
the first pair of sheets has a first region extending from a position A 300 µm away from an end of a nugget on a steel sheet mating interface in a sheet width direction to a position B 700 µm away from the end of the nugget in the sheet width direction, an Fe-Zn alloy layer present in the first region has an Fe concentration indicated by C_{Fe} (mass%),
the Fe-Zn alloy layer in the first region has a gradient of C_{Fe}, indicated by letter m, and
the Fe concentration in the Fe-Zn alloy layer in the first region satisfies all of expressions (1) to (3): $98 \geq {C}_{Fe}$ 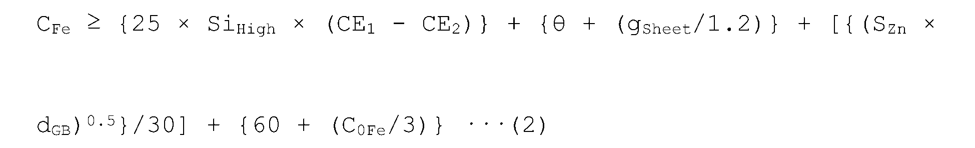 CFe ≥ {25 × SiHigh × (CE1 - CE2)} + {θ + (gSheet/1.2)} + [{(SZn × dGB)0.5}/30] + {60 + (C0Fe/3)} $\left|m\right| \leq 0.10$ in expression (2),
C_{0Fe} (mass%): Fe concentration in the steel sheet having the highest average Fe concentration in the Zn coating among the Zn-coated steel sheets in the first pair of sheets;
S_{Zn} (g/m²): Zn coating weight in the steel sheet having the largest Zn coating weight among the Zn-coated steel sheets in the first pair of sheets;
CE₁ (%): equivalent carbon content in the steel sheet having a higher equivalent carbon content in the first pair of sheets;
CE₂ (%): equivalent carbon content in the steel sheet having a lower equivalent carbon content in the first pair of sheets;
Si_{High} (mass%): Si concentration in the steel sheet having a higher Si content in the first pair of sheets;
d_{GB} (boundaries/mm): grain boundary density in an outermost layer in a base metal of the steel sheet having a higher tensile strength in the first pair of sheets;
θ (degree): inclination of the nugget obtained as an angle between a straight line connecting shoulders of the steel sheet that is outermost of the two or more overlapped steel sheets, and a tangent to an outer periphery of the nugget in the steel sheet that is outermost; and
g_{Sheet} (mm): total sheet-to-sheet gap at the steel sheet mating interface(s) of the two or more overlapped steel sheets.

2. The resistance spot welded member according to claim 1, wherein the equivalent carbon contents in the two steel sheets in the first pair of sheets are CE₁ - CE₂ ≤ 0.7, and the grain boundary density in the outermost layer in the base metal is d_{GB} ≤ 700.

3. A resistance spot welding method for producing the resistance spot welded member described in claim 1 or 2, the resistance spot welding method comprising:
a main heating step of clamping two or more overlapped steel sheets between a pair of welding electrodes, and passing a current while applying an electrode force to form a nugget, wherein
the main heating step is performed under welding conditions satisfying expression (4): 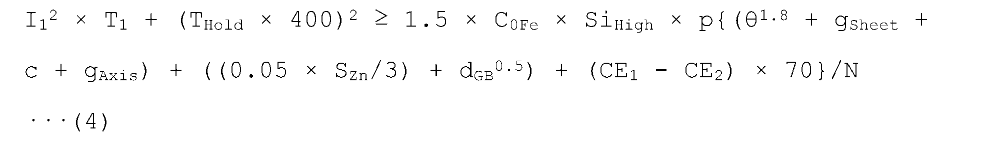 I12 × T1 + (THold × 400)2 ≥ 1.5 × C0Fe × SiHigh × p{(θ1.8 + gSheet + c + gAxis) + ((0.05 × SZn/3) + dGB0.5) + (CE1 - CE2) × 70}/N wherein I₁ (kA) is an average current in the main heating step, T₁ (s) is a current passing time in the main heating step, p (kN) is an average electrode force from the welding electrodes, T_{Hold} (s) is a post-heating holding time, and N (sheets) is the number of steel sheets,
in expression (4), c is a gap (mm) between the welding electrode and the steel sheet that is outermost of the two or more overlapped steel sheets, and g_{Axis} is the amount of misalignment (mm) between the pair of welding electrodes.

4. The resistance spot welding method for producing the resistance spot welded member according to claim 3, further comprising a posterior heating step of performing a heat post-treatment on the nugget after the main heating step, wherein
the main heating step and the posterior heating step are performed under welding conditions satisfying expression (5) instead of expression (4): 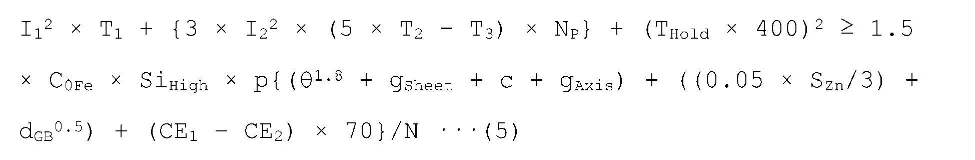 I12 × T1 + {3 × I22 × (5 × T2 - T3) × NP} + (THold × 400)2 ≥ 1.5 × C0Fe × SiHigh × p{(θ1.8 + gSheet + c + gAxis) + ((0.05 × SZn/3) + dGB0.5) + (CE1 - CE2) × 70}/N wherein I₁ (kA) is an average current in the main heating step, T₁ (s) is a current passing time in the main heating step, I₂ (kA) is an average current in the posterior heating step, T₂ (s) is a current passing time in the posterior heating step, Nₚ (time) is the number of current application by the posterior heating step, T₃ (s) is a current passing interval between the main heating step and the posterior heating step, p (kN) is an average electrode force from the welding electrodes, T_{Hold} (s) is a post-heating holding time, and N (sheets) is the number of steel sheets.

5. The resistance spot welding method for producing the resistance spot welded member according to claim 3 or 4, wherein the main heating step is performed in a state where at least one welding spot immediately before the electrode force is applied by the welding electrodes satisfies one, or two or more selected from (a) to (d):
(a) an electrode angle between the welding electrodes and the two or more overlapped steel sheets is 0.2 degrees or more;
(b) a gap of 0.5 mm or more is present between at least one pair of steel sheets among the two or more overlapped steel sheets;
(c) a gap of 0.5 mm or more is present between any of the welding electrodes and the steel sheet that is outermost of the two or more overlapped steel sheets;
(d) the amount of misalignment between the pair of welding electrodes is 0.1 mm or more.

6. The resistance spot welding method for producing the resistance spot welded member according to claim 4 or 5, further comprising a non-energization step of suspending current supply, between the main heating step and the posterior heating step.

7. The resistance spot welding method for producing the resistance spot welded member according to claim 6, wherein the non-energization step and the posterior heating step are repeated after the main heating step.
